# EUROPÄISCHE PATENTSCHRIFT

(11) **EP 3 599 365 B1**
(45) Veröffentlichungstag und Bekanntmachung des Hinweises auf die Patenterteilung: **26.05.2021**
(21) Anmeldenummer: 19188260.4
(22) Anmeldetag: 25.07.2019
(51) Int. Cl.: F02D 41/10, F02D 41/38, F02D 41/40, F02M 63/02

(54) **VERFAHREN ZUM BETRIEB EINES VERBRENNUNGSMOTORS**
METHOD FOR OPERATING A COMBUSTION ENGINE
PROCÉDÉ DE FONCTIONNEMENT D'UN MOTEUR À COMBUSTION INTERNE

(30) Priorität: 25.07.2018 CH 9362018
(43) Veröffentlichungstag der Anmeldung: 29.01.2020
(73) Patentinhaber: Liebherr-Components Deggendorf GmbH, 94469 Deggendorf (DE)
(72) Erfinder: Masson, Francois, 1752 Villars sur Glâne (CH); Petitjean, Brice, 1628 Vuadens (CH); Aspelmayr, Josef, 4311 Schwertberg (AT)
(74) Vertreter: Behr, Wolfgang

(56) Entgegenhaltungen:
- DE-A1- 10 012 024
- DE-A1- 10 342 130
- DE-A1- 19 726 756
- DE-A1-102010 007 171
- DE-A1-102010 016 094
- DE-A1-102013 103 659
- DE-A1-102016 206 359

## Beschreibung

Die vorliegende Erfindung betrifft ein Verfahren zum Betrieb eines Verbrennungsmotors, welcher einen ansteuerbaren Injektor zum Einspritzen von Kraftstoff in einen Verbrennungsraum aufweist, wobei der Injektor mit einem Kraftstoffspeicher in Verbindung steht, durch welchen er mit Kraftstoff versorgt wird. Insbesondere handelt es sich bei dem Kraftstoffspeicher um einen Druckspeicher.

Bei einem solchen Verfahren hängt die Einspritzmenge von dem Druck im Kraftstoffspeicher und der Injektor-Öffnungsdauer ab. Eine Änderung des Drucks im Kraftstoffspeicher kann daher bei unveränderter Injektor-Öffnungsdauer zu einer unerwünschten Abweichung der tatsächlichen Einspritzmenge von der Soll-Einspritzmenge führen.

In der DE 103 32 213 A1 wird daher vorgeschlagen, während der Einspritzung den Druck in dem Druckspeicher laufend zu überwachen und eine Integration über die auf Grundlage des Drucks geschätzte, variierende Einspritzrate vorzunehmen. Der Injektor soll dann geschlossen werden, sobald die integrierte Einspritzmenge die Soll-Einspritzmenge erreicht hat. Das in der DE 103 32 213 A1 vorgeschlagene Vorgehen führt zwar theoretisch zu einer besonders präzisen Ansteuerung der Einspritzmenge, scheitert in der Realität jedoch an den Echtzeit-Anforderungen an das System, da ein normales Motorsteuerungsgerät die dort vorgeschlagenen Rechenoperationen nicht in der notwendigen Geschwindigkeit ausführen kann.

Druckschrift DE 103 42 130 A1 zeigt ein Verfahren gemäß dem Oberbegriff von Anspruch 1.

Weitere Verfahren zur Ansteuerung oder Überwachung von Injektoren sind aus den Druckschriften DE 197 26 756 A1, DE 10 2010 007171 A1, DE 100 12 024 A1, DE 10 2010 016094 A1 und DE 10 2016 206359 A1 bekannt.

Aufgabe der vorliegenden Erfindung ist es, ein Verfahren zur Ansteuerung des Injektors zur Verfügung zu stellen, welches die Echtzeitanforderungen an ein solches System berücksichtigt.

Diese Aufgabe wird durch ein Verfahren gemäß Anspruch 1 gelöst. Bevorzugte Ausgestaltungen der vorliegenden Erfindung sind Gegenstand der Unteransprüche.

Die vorliegende Erfindung umfasst ein Verfahren zum Betrieb eines Verbrennungsmotors, welcher einen ansteuerbaren Injektor zum Einspritzen von Kraftstoff in einen Verbrennungsraum aufweist, wobei der Injektor mit einem Kraftstoffspeicher in Verbindung steht, durch welchen er mit Kraftstoff versorgt wird, mit den Schritten:
- Bestimmen eines ersten Druckwertes des Drucks im Kraftstoffspeicher auf Grundlage einer ersten Druckmessung,
- Bestimmen eines zweiten Druckwertes des Drucks im Kraftstoffspeicher auf Grundlage einer nach der ersten Druckmessung erfolgenden zweiten Druckmessung und
- Bestimmen einer Injektor-Öffnungsdauer in Abhängigkeit von dem ersten und dem zweiten Druckwert.

Durch dieses Vorgehen erfolgt die erste Druckmessung bereits relativ früh. Hierdurch steht auch der erste Druckwert relativ früh zur Verfügung und kann bereits für nachfolgende zeitintensive Schritte des Verfahrens genutzt werden und/oder kann mit hoher Genauigkeit bestimmt werden. Durch die nachfolgende Bestimmung des zweiten Druckwertes wird dennoch eine hohe Genauigkeit im Hinblick auf nach der ersten Druckmessung erfolgende Veränderungen des Drucks im Kraftstoffspeicher erreicht.

Die Bestimmung der Injektor-Öffnungsdauer kann in mehreren Teilschritten erfolgen, welche nicht notwendigerweise erst nach der Bestimmung des zweiten Druckwertes erfolgen müssen. Im Gegenteil wird bevorzugt mindestens ein Teilschritt zur Bestimmung der Injektor-Öffnungsdauer auf Grundlage des ersten Druckwertes durchgeführt, bevor der zweite Druckwert vorliegt.

In einer möglichen Ausgestaltung der vorliegenden Erfindung umfasst das Verfahren weiterhin den Schritt:
- Vorgabe einer gewünschten Einspritzmenge,
wobei die Bestimmung der Injektor-Öffnungsdauer in Abhängigkeit von dem ersten und dem zweiten Druckwert und der gewünschten Einspritzmenge erfolgt. Insbesondere erfolgt die Bestimmung der Injektor-Öffnungsdauer in Abhängigkeit von dem ersten und dem zweiten Druckwert so, dass die gewünschte Einspritzmenge erzielt wird.

Gemäß der vorliegenden Erfindung umfasst das Verfahren weiterhin den Schritt:
- Ansteuerung des Injektors auf Grundlage der zuvor bestimmten Injektor-Öffnungsdauer.
Insbesondere kann die zuvor bestimmte Injektor-Öffnungsdauer herangezogen werden, um den Schließzeitpunkt für den Injektor festzulegen.

In einer möglichen Ausgestaltung der vorliegenden Erfindung erfolgt die erste Druckmessung vor dem Öffnen des Injektors. Hierdurch steht ausreichend Rechenzeit für eine genaue Auswertung des Signals des Drucksensors zur Bestimmung des ersten Druckwertes zur Verfügung.

In einer möglichen Ausgestaltung der vorliegenden Erfindung erfolgt die zweite Druckmessung nach dem Öffnen des Injektors. Hierdurch steht mit dem zweiten Druckwert ein während der Öffnung des Injektors und damit während des Einspritzvorgangs ermittelter aktueller Druckwert zur Verfügung. Ändert sich daher der Druck im Kraftstoffspeicher zwischen der ersten Druckmessung und dem Beginn des Einspritzvorgangs oder während des Einspritzvorgangs, wird diese Druckänderung dennoch berücksichtigt.

Der erste Druckwert und der zweite Druckwert werden aus dem jeweiligen Signal des Sensors durch eine Signalauswertung erzeugt.

Gemäß der vorliegenden Erfindung erfolgt die Bestimmung des ersten und des zweiten Druckwertes durch unterschiedliche Auswertungsverfahren. Insbesondere können so die unterschiedlichen Anforderungen an die Tasklaufzeit berücksichtigt werden.

Dabei arbeitet ein zur Bestimmung des zweiten Druckwertes eingesetztes zweites Auswertungsverfahren schneller als ein zur Bestimmung des ersten Druckwertes eingesetztes erstes Auswertungsverfahren, d.h. es weist eine geringere Tasklaufzeit auf und läuft daher auf der Motorsteuerung schneller ab.

In einer möglichen Ausgestaltung der vorliegenden Erfindung wird zur Bestimmung des ersten Druckwertes mindestens einer der folgenden Verfahrensschritte durchgeführt, während die Bestimmung des zweiten Druckwertes ohne diesen Schritt erfolgt:
- Korrektur des Druckmesswertes ihm Hinblick auf eine Variation der Versorgungsspannung und/oder Temperatur;
- Down-Sampling;
- digitale Filterung.

Alternativ oder zusätzlich kann die Bestimmung des zweiten Druckwertes auf der Motorsteuerung mit einer höheren Priorität ablaufen als die Bestimmung des ersten Druckwertes.

In einer möglichen Ausgestaltung der vorliegenden Erfindung wird in Abhängigkeit von dem ersten Druckwert zunächst eine erste Injektor-Öffnungsdauer bestimmt und nach dem Vorliegen des zweiten Druckwertes eine Korrektur der ersten Injektor-Öffnungsdauer in Abhängigkeit von dem zweiten Druckwert vorgenommen.

Hierdurch kann die Bestimmung des zweiten Druckwertes noch später erfolgen, da die Injektor-Öffnungsdauer nach dem Vorliegen des zweiten Druckwertes nicht erst noch bestimmt werden muss, sondern eine bereits vorläufig bestimmte erste Injektor-Öffnungsdauer nur noch korrigiert werden muss.

Bevorzugt wird die erste Injektor-Öffnungsdauer daher bestimmt, bevor der zweite Druckwert bestimmt und/oder die zweite Druckmessung vorgenommen wird.

In einer möglichen Ausgestaltung der vorliegenden Erfindung hängt die Korrektur der Injektor-Öffnungsdauer von der gewünschten Einspritzmenge und/oder dem Druck im Speicher ab. Insbesondere können die gewünschte Einspritzmenge und/oder der Druck zusätzlich zu der dem zweiten Druckwert und/oder einer Druckdifferenz zwischen dem zweiten und einem dritten Druckwert in die Korrektur der ersten Injektor-Öffnungsdauer eingehen.

In einer möglichen Ausgestaltung der vorliegenden Erfindung erfolgt die Bestimmung eines Korrekturwertes in mehreren Schritten, wobei mindestens ein Schritt bereits durchgeführt wird, bevor der zweite Druckwert und/oder eine Druckdifferenz zwischen dem zweiten und einem dritten Druckwert zur Verfügung steht.

In einer möglichen Ausgestaltung der vorliegenden Erfindung erfolgt die Korrektur der ersten Injektor-Öffnungsdauer mittels eines Kennfeldes, welches von der gewünschten Einspritzmenge und/oder dem Druck im Speicher abhängt. Das Kennfeld kann beispielsweise in Form einer Tabelle und/oder in Form einer Formelmäßigen Beziehung in der Motorsteuerung abgelegt sein.

Bevorzugt wird zur Korrektur der ersten Injektor-Öffnungsdauer auf Grundlage des ersten Druckwertes ein Korrekturwert aus einem Kennfeld ausgelesen. Dies hat den Vorteil, dass der Korrekturwert bereits ermittelt werden kann, sobald der erste Druckwert zur Verfügung steht und damit zu einem relativ frühen Zeitpunkt.

Insbesondere kann der Korrekturwert auf Grundlage des ersten Druckwertes ausgelesen werden, bevor der zweite Druckwert bestimmt wurde.

Bevorzugt wird der Korrekturwert nach dem Auslesen auf Grundlage des zweiten Druckwertes angepasst. Eine solche Anpassung kann insbesondere durch eine Skalierung des Korrekturwertes mittels des zweiten Druckwertes und/oder einer Druckdifferenz zwischen dem zweiten und einem dritten Druckwert erfolgen.

Beispielsweise kann der im Kennfeld abgelegte Korrekturwert einer fest vorgegebenen Druckdifferenz entsprechen und dann angepasst werden, wenn die tatsächlich mittels des zweiten Druckwertes bestimmte Druckdifferenz zwischen dem zweiten und einem dritten Druckwert von dieser vorgegebenen Druckdifferenz abweicht.

In einer alternativen Ausgestaltung der vorliegenden Erfindung wird der zweite Druckwert und/oder die Druckdifferenz zwischen dem zweiten und einem dritten Druckwert dagegen zur Korrektur des ersten Druckwertes eingesetzt.

Bevorzugt erfolgt in diesem Fall die Bestimmung der Injektor-Öffnungsdauer auf Grundlage des korrigierten Druckwertes.

In einer möglichen Ausgestaltung der vorliegenden Erfindung erfolgt die Bestimmung der Injektor-Öffnungsdauer in Abhängigkeit von einer Druckdifferenz aus dem zweiten Druckwert und einem dritten Druckwert. Durch eine solche Druckdifferenz können Veränderungen des Drucks im Kraftstoffspeicher zwischen der ersten und der zweiten Druckmessung berücksichtigt werden.

Insbesondere kann die Korrektur der ersten Injektor-Öffnungsdauer, wie sie oben beschrieben wurde, von einer Druckdifferenz aus dem zweiten Druckwert und einem dritten Druckwert abhängen.
In einer möglichen Ausgestaltung der vorliegenden Erfindung kann der erste Druckwert selbst als dritter Druckwert herangezogen werden. Werden für die Bestimmung des ersten und des zweiten Druckwertes jedoch unterschiedliche Auswertungsverfahren eingesetzt, ist dies ungünstig. Bevorzugt wird der dritte Druckwert daher separat zu dem ersten Druckwert bestimmt.

In einer möglichen Ausgestaltung der vorliegenden Erfindung erfolgt die Bestimmung des zweiten und des dritten Druckwertes durch Anwendung des gleichen Auswertungsverfahrens. Eventuelle systematische Fehler bei der Bestimmung der Druckwerte gehen so in gleicher Weise in beide Druckwerte ein, was bei der Bildung der Druckdifferenz zu einer Kompensation bzw. zu einer geringen Über- oder Unterkompensation führt.

Bevorzugt erfolgt die Bestimmung des dritten Druckwertes mit einem Auswertungsverfahren, welches eine geringere Tasklaufzeit aufweist als das zur Bestimmung des ersten Druckwertes eingesetzte Auswertungsverfahren.

Bevorzugt korreliert die Druckdifferenz mit der Veränderung des Drucks im Kraftstoffspeicher zwischen der ersten Druckmessung und der zweiten Druckmessung. Hierfür wird der dritte Druckwert bevorzugt auf Grundlage der ersten Druckmessung oder einer dritten Druckmessung bestimmt, welche in unmittelbarer zeitlicher Nähe zu der ersten Druckmessung erfolgt.

Der dritte Druckwert kann in einer ersten Variante auf Grundlage der ersten Druckmessung bestimmt werden. Wird die erste Druckmessung zur Bestimmung des dritten Druckwertes herangezogen, ergibt sich die beste zeitliche Übereinstimmung zwischen dem ersten und dem dritten Druckwert. Allerdings muss in diesem Fall durch die zusätzlich zur Auswertung benötigte Rechenzeit die erste Druckmessung früher erfolgen, was ungünstig für die Genauigkeit ist.

Der dritte Druckwert kann in einer zweiten Variante daher auf Grundlage einer dritten Druckmessung bestimmt werden, d.h. einer zusätzlich zu der ersten und der zweiten Druckmessung erfolgenden Druckmessung.

Die dritte Druckmessung kann nach der ersten Druckmessung erfolgen. Allerdings muss in diesem Fall durch die zusätzlich zur Auswertung benötigte Rechenzeit die erste Druckmessung früher erfolgen, was ungünstig für die Genauigkeit ist.

Bevorzugt wird der dritte Druckwert daher auf Grundlage einer dritten Druckmessung bestimmt, wobei die dritte Druckmessung vor der ersten Druckmessung erfolgt.

Bevorzugt erfolgt die Bestimmung des ersten Druckwertes dabei unmittelbar nach der Bestimmung des dritten Druckwertes. Hierdurch bleibt der zwischen der ersten und der dritten Druckmessung vorliegende Zeitversatz vergleichsweise niedrig.

In einer möglichen ersten Variante der vorliegenden Erfindung erfolgt die zweite Druckmessung und/oder die Bestimmung des zweiten Druckwertes zu einem in Bezug auf den Öffnungszeitpunkt des Injektors fest vorgegebenen Zeitpunkt.

Insbesondere kann dieser Zeitpunkt unabhängig von einer gewünschten Einspritzmenge fest vorgegeben sein und sich daher nicht von Einspritzvorgang zu Einspritzvorgang unterscheiden. Dies hat den Vorteil einer besonders einfachen und sicheren Implementierung.

Der Zeitpunkt wird in diesem Fall bevorzugt so festgelegt, dass bei der geringstmöglichen Injektor-Öffnungsdauer der finale Wert der Injektor-Öffnungsdauer gerade noch rechtzeitig vorliegt, um den Injektor rechtzeitig zu schließen.

In einer zweiten Variante der vorliegenden Erfindung erfolgt die zweite Druckmessung und/oder die Bestimmung des zweiten Druckwertes zu einem in Bezug auf den Öffnungszeitpunkt des Injektors variablen Zeitpunkt. Hierdurch kann in vielen Fällen eine noch spätere zweite Druckmessung erfolgen.

Insbesondere kann der Zeitpunkt in Abhängigkeit von einer gewünschten Einspritzmenge für den jeweiligen Öffnungsvorgang des Injektors bestimmt werden.

Ist daher beispielsweise für einen zweiten Einspritzvorgang eine größere Einspritzmenge vorgesehen als für einen ersten Einspritzvorgang, was zu einer längeren Injektor-Einspritzdauer führt, erfolgt die zweite Druckmessung und/oder die Bestimmung des zweiten Druckwertes in Bezug auf den Öffnungszeitpunkt des Injektors zu einem späteren Zeitpunkt als bei dem ersten Einspritzvorgang.

Das erfindungsgemäße Verfahren kommt bevorzugt bei einem Verbrennungsmotor zum Einsatz, welcher einen gemeinsamen Kraftstoffspeicher für eine Mehrzahl von Injektoren aufweist, welche unterschiedlichen Brennräumen zugeordnet sind, insbesondere bei einem Verbrennungsmotor mit einem Common-Rail-Einspritzsystem.

In einer möglichen Ausgestaltung der vorliegenden Erfindung kommt das Verfahren bei einem Verbrennungsmotor zum Einsatz, welcher eine Mehrzahl von Injektoren aufweist, wobei die Bestimmung der Injektor-Öffnungsdauer für jeden Injektor individuell erfolgt.

In einer möglichen Ausgestaltung der vorliegenden Erfindung weist der Verbrennungsmotor eine Pumpe zur Erzeugung eines variablen Soll-Drucks im Kraftstoffspeicher auf, wobei anhand von Motorbetriebsparametern und/oder einer Benutzervorgabe eine Festlegung des Soll-Drucks und einer gewünschten Einspritzmenge erfolgt.

In diesem Fall kann insbesondere eine Änderung des Soll-Drucks und/oder ein Betrieb der Pumpe zu einer deutlichen Änderung des Drucks im Kraftstoffspeicher führen, welche jedoch schwierig mit dem Betrieb des Injektors koordiniert werden kann. Das erfindungsgemäße Verfahren erlaubt dennoch eine zuverlässige und genaue Steuerung der Einspritzmenge.

Bevorzugt wird die Injektor-Öffnungsdauer in Abhängigkeit von der gewünschten Einspritzmenge bestimmt.

Insbesondere kann die erste Injektor-Öffnungsdauer in Abhängigkeit von der gewünschten Einspritzmenge und dem ersten Druckwert bestimmt werden. Die Korrektur mittels des zweiten Druckwertes erhöht dann die Genauigkeit der tatsächlich eingespritzten Kraftstoffmenge.

Neben dem erfindungsgemäßen Verfahren umfasst die vorliegende Erfindung weiterhin eine Motorsteuerungssoftware mit Befehlen zur Durchführung eines Verfahrens, wie es oben beschrieben wurde. Insbesondere ist die Motorsteuerungssoftware so programmiert, dass sie das erfindungsgemäße Verfahren automatisch durchführt, wenn sie auf einer Motorsteuerung abläuft.

Die vorliegende Erfindung umfasst weiterhin einen Verbrennungsmotor mit einem ansteuerbaren Injektor zum Einspritzen von Kraftstoff in einen Verbrennungsraum und einen Kraftstoffspeicher, mit welchem der Injektor in Verbindung steht und über den er mit Kraftstoff versorgt wird sowie mit einem Drucksensor zur Messung des Drucks im Kraftstoffspeicher. Der Verbrennungsmotor weist eine Motorsteuerung auf, welche programmiert ist, folgende Schritte durchzuführen:
- Bestimmen eines ersten Druckwertes des Drucks im Kraftstoffspeicher auf Grundlage einer ersten Druckmessung,
- Bestimmen eines zweiten Druckwertes des Drucks im Kraftstoffspeicher auf Grundlage einer nach der ersten Druckmessung erfolgenden zweiten Druckmessung und
- Bestimmen einer Injektor-Öffnungsdauer in Abhängigkeit von dem ersten und dem zweiten Druckwert und
- Ansteuerung des Injektors auf Grundlage der zuvor bestimmten Injektor-Öffnungsdauer,
wobei die Bestimmung des ersten und des zweiten Druckwertes durch unterschiedliche Auswertungsverfahren erfolgt, wobei ein zur Bestimmung des zweiten Druckwertes eingesetztes zweites Auswertungsverfahren schneller arbeitet als ein zur Bestimmung des ersten Druckwertes eingesetztes erstes Auswertungsverfahren.

Bevorzugt steht die Motorsteuerung mit mindestens einem Drucksensor zum Messen des Drucks im Kraftstoffspeicher in Verbindung und wertet dessen Signale aus. Weiterhin steht die Motorsteuerung mit dem Injektor in Verbindung und steuert diesen an. Insbesondere steuert die Motorsteuerung dabei die Öffnungs- und Schließzeitpunkte des Injektors gemäß der erfindungsgemäß korrigierten Injektor-Öffnungsdauer an.

Das erfindungsgemäße Verfahren läuft bevorzugt automatisch auf der Motorsteuerung ab.

Bevorzugt ist die Motorsteuerung so programmiert, dass sie das erfindungsgemäße Verfahren so durchführt, wie es oben beschrieben wurde.

Die Motorsteuerung weist bevorzugt einen Microprozessor und einen nichtflüchtigen Speicherbereich auf, in welchem eine Motorsteuerungssoftware gespeichert ist. Die Motorsteuerungssoftware wird durch den Microprozessor abgearbeitet. Die Motorsteuerung steht mit Sensoren in Verbindung und wertet deren Signale aus, und steuert Aktoren des Motors und insbesondere die Injektoren des Motors an.

Bei dem erfindungsgemäßen Verbrennungsmotor kann es sich um einen 4-Takt-Motor handeln. Dieser kann gemäß einem Otto- und/oder Diesel-Verfahren arbeiten.

Bei dem erfindungsgemäßen Verbrennungsmotor kann es sich um einen Off-Road-Motor handeln. Insbesondere kann der Verbrennungsmotor gemäß der vorliegenden Erfindung zum Antrieb mobiler Arbeitsmaschinen eingesetzt werden.

Die vorliegende Erfindung umfasst daher weiterhin eine mobile Arbeitsmaschine mit einem Verbrennungsmotor, wie er oben beschrieben wurde.

Der Einsatz eines erfindungsgemäßen Verbrennungsmotors in einer stationären Anwendung wie beispielsweise zum Antrieb eines Generators ist jedoch ebenfalls denkbar, genauso wie der Einsatz in beliebigen anderen Anwendungen.

Die vorliegende Erfindung wird nun anhand von Ausführungsbeispielen und Zeichnungen näher beschrieben.

Dabei zeigen:
- Fig. 1:: eine Prinzipdarstellung eines erfindungsgemäßen Verbrennungsmotors,
- Fig. 2:: ein Diagramm, welches den Injektorstrom in Abhängigkeit von der Zeit bei Einspritzvorgängen mit unterschiedlicher Injektor-Öffnungsdauer (TOC) zeigt,
- Fig. 3:: ein Diagramm, welches den Injektorstrom und die Einspritzrate in Abhängigkeit von der Zeit bei einem Einspritzvorgang, sowie einen beispielhaften Verlauf des Drucks im Druckspeicher zeigt,
- Fig. 4:: ein Diagramm, welches ebenfalls den Injektorstrom und die Einspritzrate in Abhängigkeit von der Zeit bei einem Einspritzvorgang, sowie einen beispielhaften Verlauf des Drucks im Druckspeicher zeigt, und bei welchem erfindungsgemäß relevante Zeitpunkte A bis I eingezeichnet sind,
- Fig. 5:: ein Blockschaltbild eines ersten Ausführungsbeispiels eines erfindungsgemäßen Verfahrens,
- Fig. 6:: ein detaillierteres Blockschaltbild des in Fig. 5 gezeigten Ausführungsbeispiels eines erfindungsgemäßen Verfahrens,
- Fig. 7:: ein Diagramm, in welchem ein Kennfeld zur Bestimmung der ersten Injektor-Öffnungsdauer in Abhängigkeit von dem Druck und der gewünschten Einspritzmenge dargestellt ist,
- Fig. 8:: ein Diagramm, in welchem ein Kennfeld zur Bestimmung eines Korrekurwertes in Abhängigkeit von dem Druck und der gewünschten Einspritzmenge dargestellt ist,
- Fig. 9:: ein Blockschaltbild eines zweiten Ausführungsbeispiels eines erfindungsgemäßen Verfahrens,
- Fig. 10:: zwei Diagramme, welche für einen ersten Testzyklus die Abweichung zwischen einer gewünschten und einer tatsächlichen Einspritzmenge zeigen, wobei oben gemäß einem Verfahren nach dem Stand der Technik und unten gemäß einem erfindungsgemäßen Verfahren gearbeitet wird, und
- Fig. 11:: zwei Diagramme, welche für einen zweiten Testzyklus die Abweichung zwischen einer gewünschten und einer tatsächlichen Einspritzmenge zeigen, wobei oben gemäß einem Verfahren nach dem Stand der Technik und unten gemäß einem erfindungsgemäßen Verfahren gearbeitet wird.

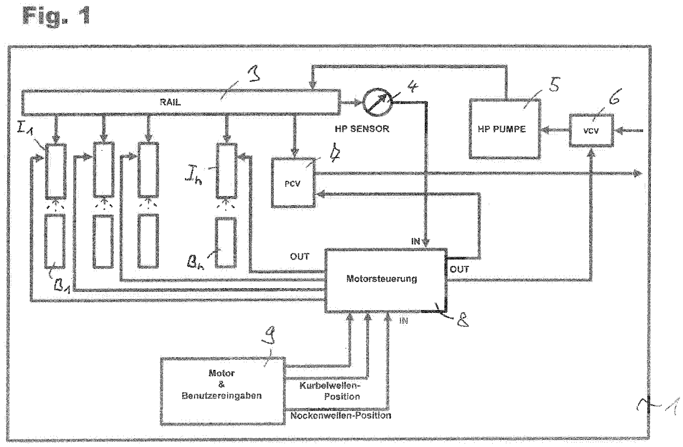

In Fig. 1 ist ein Ausführungsbeispiel eines erfindungsgemäßen Verbrennungsmotors 1 gezeigt. Der Verbrennungsmotor weist mehrere Injektoren I₁ bis Iₙ, zum Einspritzen von Kraftstoff in Brennräume B₁ bis Bₙ auf. Die Injektoren stehen mit einem gemeinsamen Druckspeicher 3 in Verbindung, welcher diese mit Kraftstoff versorgt. Es handelt sich daher im Ausführungsbeispiel um ein Common-Rail-Einspritzsystem. Der Druckspeicher wird im Folgenden daher auch als Rail bezeichnet. Das erfindungsgemäße Verfahren ist jedoch auch bei anderen Einspritzsystemen einsetzbar, und insbesondere auch dann, wenn der Druckspeicher nur einen Injektor mit Kraftstoff versorgt. Der Druckspeicher dient der Zwischenspeicherung des Kraftstoffs, mit welchem er den oder die Injektoren versorgt, und stellt daher einen Kraftstoffspeicher dar.

Der Druck im Druckspeicher 3 wird über einen Drucksensor 4 gemessen. Weiterhin ist eine Hockdruckpumpe 5 vorgesehen, über welche im Druckspeicher 3 ein SollDruck erzeugt wird. Die Hochdruckpumpe wird über ein Volumen-Steuerungs-Ventil 6 mit Kraftstoff versorgt und pumpt diesen in den Druckspeicher 3. Der Druckspeicher 3 steht über ein Druck-Steuerungs-Ventil 7 und eine Rücklaufleitung mit dem Tank in Verbindung. Das Druck-Steuerungs-Ventil 7 arbeitet als Überdruck-Ventil und öffnet bei Erreichen des Soll-Drucks.

Die Signale des Drucksensors 4 werden durch eine Motorsteuerung 8 ausgewertet. Die Motorsteuerung steuert die Injektoren I₁ bis I_{N}, die Hochdruckpumpe 5 und die Ventile 6 und 7 an. Weiterhin erhält die Motorsteuerung als Eingangssignale Werte weiterer Sensoren 9, insbesondere die Kurbelwellenposition und die Nockenwellenposition, sowie Benutzervorgaben wie bspw. die gewünschte Motordrehzahl.

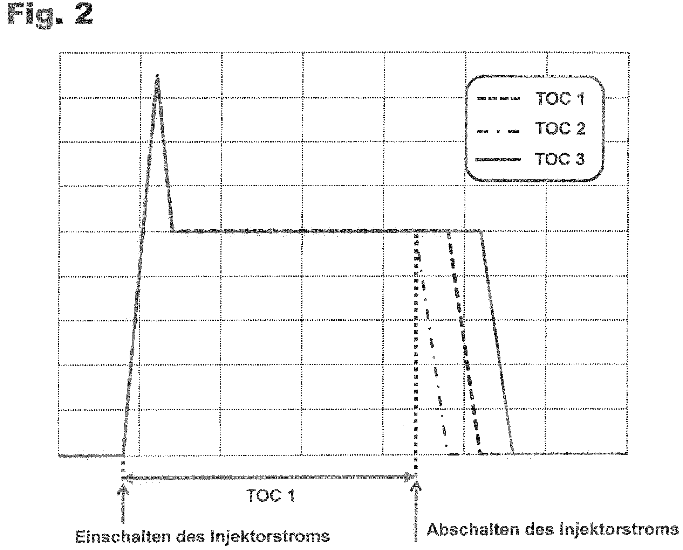

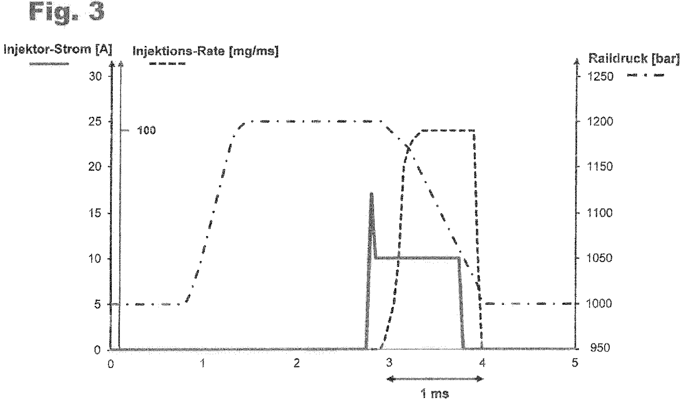

Anhand der Fig. 2 und 3 werden nun zunächst die allgemeinen Zusammenhänge zwischen der Ansteuerung eines Injektors I₁ bis I_{N}, der Einspritzrate bzw. Einspritzmenge und dem Druck im Druckspeicher 3 dargestellt.
Bei einem Einspritzvorgang, unabhängig davon ob es sich um die Haupteinspritzung, eine Vor- oder Nacheispritzung handelt, kann das Einhalten der Sollmenge des einzuspritzenden Kraftstoffs nicht direkt überwacht werden. Demzufolge ist eine auf Einzelzyklen bezogene Mengenregelung der Kraftstoffeinspritzung nicht möglich und eine Steuerung mit Ungenauigkeiten behaftet. Das Einhalten der Solleinspritzmenge ist nur in einem sich über mehrere Zündvorgänge erstreckenden Kollektiv möglich.

Der Raildruck wird durch eine in der Motorsteuerung implementierte Motorbetriebsstrategie festgelegt. Hingegen ist die direkte physikalische Beeinflussung des Raildrucks durch die Motordrehzahl und das Motordrehmoment niedrig. Der Druckaufbau im Rail ist vom Einspritzvorgang entkoppelt. Das Fassungsvermögen eins Rails übersteigt die Maximalmenge eines Einspritzvorgangs sehr deutlich. Daher bleibt der Raildruck auch während eines Einspritzvorgangs halbwegs konstant, selbstverständlich unter der Voraussetzung, dass die Motorbetriebsstrategie im Beobachtungszeitraum das Konstanthalten des Raildrucks vorsieht.

In dem zur Erklärung der Erfindung betrachteten Common Rail System gemäss Fig. 1 kann die während eines Einspritzvorgangs zugeführte Kraftstoffmenge über den Raildruck und die Einspritzdauer, d.h. der Zeitspanne, in der der Injektor geöffnet ist, festgelegt werden. Im transienten Betrieb der Verbrennungskraftmaschine, d.h., bei kurzzeitig auftretenden starken Drehzahl- und Drehmomenten-Änderungen kann der Raildruck nur mit einer gewissen Verzögerung auf den durch die Motorbetriebsstrategie vorgesehenen neuen Betriebspunkt angepasst werden, wohingegen die Einspritzdauer kurzfristig auf die neue Betriebssituation angepasst werden kann.

Liegt beispielsweise der Raildruck bei einem die Verbrennungskraftmaschine beaufschlagenden Lastsprung noch deutlich unterhalb seines neuen Sollwertes kann dennoch die vorgesehene Kraftstoff-Gesamtmenge des aktuell vorliegenden Einspritzvorgangs durch eine Erhöhung der Eispritzdauer, d.h. eine Verlängerung der Zeitdauer, in der der Injektor geöffnet ist, bereitgestellt werden.

Ferner kann der Beginn einer Einspritzung, d.h. der Öffnungszeitpunkt bzw. der Kurbelwellenwinkel, bei dem der Injektor geöffnet wird, festgelegt werden. Der in Abhängigkeit der Betriebssituation vorteilhaften Festlegung des Einspritzbeginns fällt eine wichtige Bedeutung für den möglichst optimalen Betrieb der Verbrennungskraftmaschine zu und ist ein zentraler Bestandteil der Einspritzstrategie innerhalb der Motorsoftware.

Unter einer Idealisierung und der starken Vereinfachung, dass der Wert des Raildruck genau bekannt ist und sich dessen Wert während einer Einspritzung weder örtlich noch zeitlich ändert, könnte die Einspritzdauer exakt angepasst werden und dadurch die exakte Soll-Einspritzmenge erzielt werden. In der Realität treten zahlreiche die Ist-Einspritzmenge beeinflussende Effekte auf. Das sind ohne Anspruch auf Vollständigkeit:
a) Das Abströmen von Kraftstoff aus dem geöffneten Injektor führt zu einer Druckabnahme
b) Während eines Einspritzvorgangs kann es vorkommen, dass die Hochdruckpumpe dem Rail Kraftstoff zuführt.
c) Der Erfassungsbereich des Drucksensors und das Sackloch im Inneren der Injektordüse sind räumlich getrennt. Abgesehen von einem Stationärfall, der bei einer betriebenen VKM nicht vorliegt, bestehen im Kraftstoffsystem zwischen dem Drucksensor und dem Injektor Laufzeiten und damit unterschiedliche Momentan-Druckwerte.
d) Pumpenpulsationen
e) Das schnelle Öffnen und Schliessen des Injektors löst Druckschwankungen aus.
f) Der tatsächliche Einspritzbeginn sowie das Einspritzende treten mit einem gewissen Zeitverzug zur Ansteuerung des Injektors auf.
g) Alterung der Injektoren
h) Temperaturabhängigkeit der Kraftstoffdichte

Untersuchungen über die Ausmasse dieser Beeinträchtigungen haben gezeigt, dass die möglichen zeitlichen Überschneidungen des Einspritzens und dem Zuführen von Kraftstoff durch die Hochdruckpumpe zu vergleichsweise starken Abweichungen zwischen der Soll- und Istmenge einer Einspritzung führen. Dabei sind diese Überschneidungen nicht reproduzierbar. Je nach Lastwechsel liegt ein unterschiedliches Zeitprofil des Raildrucks vor. In Abhängigkeit des Zustands der VKM legt die Motorbetriebsstrategie in Bezug auf den Kurbelwellenwinkel unterschiedliche Einspritzbeginne fest. Doch auch bei einem stationären Arbeitspunkt der VKM liegt in den allermeisten Fällen kein synchroner Betrieb zwischen der Hochdruckpumpe und den Einspritzungen vor.

Durch die Motorbetriebsstrategie ist die Dauer der Injektorbestromung zwar eindeutig definiert. Allerdings basiert diese Vorgabe im Zeitraum der aktuatorischen Ausführung auf nicht mehr gültigen Eingangswerten. Mit einer Erhöhung der von der Verbrennungskraftmaschine abverlangten Dynamik ergibt sich ein zunehmendes Potential an Kompensation, das mit der Erfindung ausgeschöpft werden kann.

Die vorliegende Erfindung dient daher der genaueren Einhaltung der Solleinspritzmenge für jeden einzelnen Einspritzvorgang. Anhand von Fig. 2 bis 4 werden die hierfür betrachteten Zeiträume, welche im Micro-Sekunden-Bereich liegen, näher erläutert.

Anhand der Zeitverläufe des Raildrucks [bar], des Injektorstroms [A] und der Injektionsrate [mg/ms] ist in Fig. 3 ein vereinfachter und idealisierter Einspritzvorgang dargestellt. Zu Beginn des Beobachtungszeitraums der zur Vereinfachung als Zeitpunkt t = 0 festgelegt wird, liegt ein Injektorstrom I = 0 A und demzufolge eine Injektionsrate von 0 vor. Der anfänglich vorliegende Raildruck von 1000 bar wird über das Zuführen von Kraftstoff über die Hochdruckpumpe, was zu einem Zeitpunkt etwas unterhalb von einer Millisekunde nach dem Beobachtungsbeginn einsetzt, erhöht. Bei Annäherung des Raildrucks auf 1200 bar wird die Hochdruckpumpe abgeregelt, sodass der Raildruck zunächst diesen Wert beibehält. Zu einem Zeitpunkt etwas unterhalb von drei Millisekunden wird der Injektor bestromt. Entsprechend setzt mit einer gewissen Verzögerung ein Kraftstofffluss durch die Düsenpritzlöcher ein. Nach dem Erlöschen des Injektorstroms setzt der Injektor-Schliessvorgang ein, woraufhin der Kraftstofffluss unterbunden wird. Während der Kraftstoffzufuhr erfolgt eine Abnahme des Raildrucks von ausgehend 1200 bar auf 1000 bar. Nachdem der Raildruck auf diesen Wert abgefallen ist, und sich der Injektor gerade geschlossen hat, steht für den gemäss der Motorzündfolge als nächstes zu betätigenden Injektor der soeben beschriebene Ablauf bevor.

Die im Diagramm und im Text gegebenen Zahlenwerte und sich daraus ergebenden Zahlenverhältnisse lehnen sich lediglich an die Grössenordnung der Werte von realen Systemen an. So sind etwa die Zeitangaben unmittelbar abhängig von der Kurbelwellendrehzahl und können sich je nach Betriebssituation um ein Vielfaches voneinander unterscheiden. Die abgebildeten Zeitverläufe sind vereinfacht und idealisiert, um eine möglichst einfache Erklärung bieten zu können.

Fig. 2 zeigt drei Zeitverläufe des Injektorstroms. Zur besseren Verdeutlichung handelt es sich um eine vereinfachte Darstellung. In Bezug auf das zeitliche Ausmass der Injektorbestromung sind die gezeichneten Flankensteilheiten geringer als die der Realität. Das Überschreiten eines Strom-Schwellenwertes führt zum Öffnen des Injektors. Bei Unterschreitung eines Strom-Schwellenwertes schliesst sich der Injektor. In Bezug auf das Diagramm fällt das Einschalten der drei Stromverläufe auf die gleiche Stelle der Abszisse. Wie zu erkennen, wird der Injektorstrom nach einer unterschiedlichen Einschaltdauer (TOC 2 < TOC 1 < TOC 3) abgeschaltet. TOC bedeutet time of current. Damit ist die Dauer der Bestromung eines Injektors während eines Einspritzvorgangs gemeint. In einer vereinfachten und idealisierten Betrachtung entspricht der TOC-Wert der Kraftstoffeinspritzungsdauer und wird im Rahmen der hier zu erklärenden Erfindung daher mit der Injektor-Öffnungsdauer gleichgesetzt. Aufgrund der Ansprechzeiten realer Systeme steht der TOC-Wert in einem engen Zusammenhang mit der Kraftstoffeinspritzungsdauer; so auch die steigende Flanke des Injektorstroms mit dem Einspritzbeginn und die fallende zum Wert 0 hinführende Flanke des Injektorstroms mit dem Einspritzende.

Unter der Voraussetzung, dass in allen drei Fällen ein Raildruck der gleichen Höhe vorliegt (p1 = p2 = p3), wird bei demjenigen Einspritzvorgang, bei dem der Injektorstrom am längsten eingeschaltet ist, d.h. das Maximum der drei zugehörigen TOC-Werte vorliegt, dem Brennraum die grösste Kraftstoffmenge zugeführt. Gleichermassen kann aber bei einem höheren Raildruck p der Injektorstrom nach einer entsprechend kürzeren Dauer wieder abgeschaltet werden und auf diese Weise eine Reproduzierbarkeit der eingespritzten Kraftstoffmenge erzielt werden. Im Fall eines geringeren Raildrucks kann selbstverständlich der TOC erhöht werden, um auch eine Reproduzierbarkeit der eingespritzten Kraftstoffmenge zu ermöglichen. So könnte das Diagramm in Fig. 2 folgende drei Szenarien illustrieren.

Fall 1: Für den anstehenden Einspritzvorgang befindet sich der Raildruck p1 auf seinem durch die Motorbetriebsstrategie festgelegten Sollwert. Aus der Motorbetriebsstrategie ergibt sich der Sollwert der Einschaltdauer des Injektorstroms der Grösse von TOC 1.

Fall 2: Der Raildruck liegt oberhalb seines Sollwertes. Damit während der anstehenden Einspritzung die vorgegebene Gesamtkraftstoffmenge dem Brennraum zugeführt wird, muss eine kürzere Bestromung des Injektors (TOC 2 < TOC 1) erfolgen.

Fall 3: Der Raildruck liegt unterhalb seines Sollwertes. Damit während der anstehenden Einspritzung die vorgegebene Gesamtkraftstoffmenge dem Brennraum zugeführt wird, erfolgt eine längere Bestromung des Injektors (TOC 3 > TOC 1).

Wie ersichtlich, kann eine Abweichung zwischen dem Soll- und Istwert des Raildrucks durch eine Anpassung der Bestromungsdauer prinzipiell ausgeglichen werden, sodass die für den Einspritzvorgang vorgesehene Sollmenge des zugeführten Kraftstoffs eingehalten werden kann. Selbstverständlich muss der Wert der Bestromungsdauer vor dem frühestmöglichen Ende der Bestromung bekannt sein, weil ansonsten bei einer hohen Überschreitung des Raildruck-Sollwertes das rechtzeitige Schliessen des Injektors verpasst worden ist und als Folge davon eine Einspritzung einer zu hohen Kraftstoffmenge unvermeidbar ist.

Bevor die in Bezug auf den jeweils nächstfolgenden Einspritzvorgang erfindungsgemässe Funktion zur Bestimmung der Injektor-Öffnungsdauer bzw. des TOC zum Einsatz kommt, wurde durch die Motorbetriebsstrategie in Abhängigkeit bestimmter Zustandsgrössen z.B. der Motordrehzahl der Einspritzwinkel in Bezug auf die Kurbelwellen und Nockenwellen Winkelstellung [0° bis 720°] festgelegt. Zur Bestimmung der Einspritzdauer durch die Motorbetriebsstrategie wird der Istwert des Raildrucks als eine massgebliche Eingangsgrösse benötigt und zwar als Digitalsignal, welches ausgehend von dem Rohsignal des Sensors aufzubereiten ist.

Damit eine zuverlässige Übereinstimmung zwischen dem tatsächlich vorliegenden physikalischen Raildruck und dem digitalen Messwert besteht, ist eine Signalaufbereitung erforderlich, die sich aus verschiedenen Einzelschritten zusammensetzt.

Bis ein entsprechend den Anforderungen genügend zuverlässiger Wert des Raildrucks der Motorbetriebsstrategie zur Verfügung steht, können bereits wenige Millisekunden vergehen. Der Drehzahl-Drehmomenten-Betriebspunkt der Verbrennungskraftmaschine hat einen massgeblichen Einfluss darauf, zu welchem Zeitpunkt der Wert des Raildrucks der Motorbetriebsstrategie zur Verfügung stehen muss. Bevorzugt wird genau der Zeitpunkt, an dem unter Nutzung dieses Wertes die Berechnung des Einspritzendes gerade dann beendet ist, wenn ein zur Einhaltung der kürzest möglichen Dauer der in Betracht zu ziehenden Einspritzzeiträume notwendiges Einspritzende noch umgesetzt werden könnte.

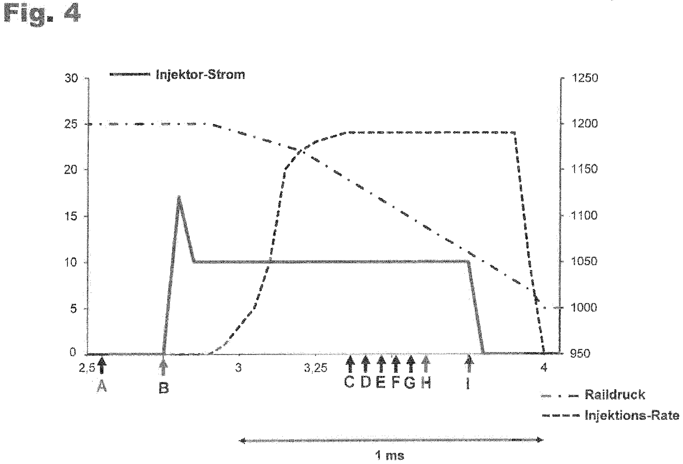

Fig. 4 zeigt einen Ausschnitt der in Fig. 3 dargestellten Verläufe innerhalb des Zeitabschnitts, in dem eine Bestromung des Injektors und somit eine Kraftstoffzuführung durch die Spritzlöcher erfolgt. Die mit den Buchstaben markierten Zeitpunkte sind als qualitative Angaben zu verstehen und dienen im Folgetext zur Erklärung des Ablaufs.

Nachdem bereits vorausgehend die Kraftstoff-Gesamtmenge der anstehenden Einspritzung und der Einspritzbeginn durch die Motorsteuerungssoftware festgelegt worden sind, muss ihr der Wert des Raildrucks spätestens zu einem definierten Zeitpunkt A zur Verfügung stehen. Wie aus dem Folgetext ersichtlich, ist eine Festlegung des Zeitpunkts A auf einen möglichst späten Zeitpunkt vorteilhaft. Je nach Common Rail System ist der Zeitpunkt A unterschiedlich festgelegt, liegt aber immer innerhalb eines Zeitintervalls im Bereich des Einschaltzeitpunkts der Injektor-bestromung B.

Aus diesem zum Zeitpunkt A zur Verfügung gestellten Raildruckwert werden die Dauer der Injektorbestromung TOC und damit auch der Abschaltzeitpunkt der Injektorbestromung festgelegt. Letzteres ist in dem Diagramm der Zeitpunkt I. Der im Diagramm markierte Zeitpunkt H ist der früheste in Betracht zu ziehende Abschaltzeitpunkt der Injektorbestromung. Damit bei Zutreffen der entsprechenden Bedingungen - dem Vorliegen eines besonders hohen Raildrucks und der Massgabe bei der unmittelbar anstehenden Einspritzung eine besonders geringe Kraftstoffmenge zuzuführen - der Injektorstrom rechtzeitig abgeschaltet werden kann, darf der Zeitpunkt A nicht zu spät erfolgen. (Eine solche Konstellation besteht bspw. bei einer anstehenden Voreinspritzung auf die eine Haupteinspritzung bei Vorliegen eines hohen Kraftstoffbedarfs folgt.)

Die während des Einspritzvorgangs auftretende Änderung des Raildrucks, die im zur Illustrierung des Vorgangs dienenden Diagramm eine Absenkung von etwa 1200 bar auf 1000 bar aufzeigt, ist von grossen Nachteil, da der berechnete Zeitpunkt, an dem der Injektorstrom abgeschaltet werden soll und bei einem dem Stand der Technik entsprechenden System abgeschaltet wird, letztlich auf einer falschen Vorgabe beruht, weswegen im gegebenen Beispiel die Istmenge der Kraftstoffeinspritzung geringer als die Sollmenge ist. Gleichermassen kann während eines Einspritzvorgangs die Istmenge der Kraftstoffeinspritzung höher als die Sollmenge sein und zwar dann, wenn die Hochdruckpumpe während einer vorliegenden Kraftstoff-Einspritzung dem Rail Kraftstoff zuführt.

Zwar wird eine Hochdruckpumpe unmittelbar über einen Nebenabtrieb von der Verbrennungskraftmaschine angetrieben, jedoch liegt für das zwar feste Übersetzungsverhältnis ein Faktor vor, der ein relativ grosses kleinstes gemeinsames Vielfaches zum Wert zwei aufweist. Denn einerseits sollte die Hochdruckpumpe nicht mit unnötig hohen Drehzahlen betrieben werden, um die Reibungsverluste und den damit einhergehenden Verschleiss zu begrenzen. Andererseits muss das Übersetzungsverhältnis genügend gross sein, damit die Hochdruckpumpe bei jeder Kurbelwellendrehzahl eine ausreichend hohe Kraftstoffförderrate aufweisen kann. (Aufgrund ihrer weitläufigen Verbreitung wird eine 4-Takt-Verbrennungskraftmaschine zugrunde gelegt.) Wäre das Übersetzungsverhältnis bspw. 1.7, dann liegt im Fall einer 4-Takt Verbrennungskraftmaschine für das Wertepaar (Winkellage der Kurbelwelle und Winkellage der Hochdruckpumpe eine Periodendauer von 34 vor Umdrehungen vor. Aufgrund einer langen Periodendauer für das Wertepaar der besagten Winkellagen kann man auch bei einer stationär betriebenen Verbrennungskraftmaschine nicht ohne weiteres über fest in der Motorsteuerungssoftware implementierte Parameter eine Vergleichmässigung der Einspritzmenge erzielen.

Bei dynamischen Anwendungen ist eine solche Vergleichmässigung durch Parameter keinesfalls möglich. Denn hierbei ist die Abweichung zwischen dem Soll- und Istwert des Raildrucks nicht nur von dem Wertepaar der besagten Winkellagen abhängig, sondern wird darüber hinaus durch sich ständig ändernde Soll-Einspritzmengen beeinflusst. Ferner unterliegt die Winkellage des Einspritzbeginns dem jeweiligen Drehzahl-Drehmoment-Betriebspunkt der Verbrennungskraftmaschine. Ausserdem ist aus Effizienzgründen die Drehzahl-bezogene Förderrate einer Hochdruckpumpe variabel einstellbar. Kurzum besteht bei einer dynamisch betriebenen Verbrennungskraftmaschine in Bezug auf die Änderungen des Raildrucks während der aufeinander folgenden Einspritzvorgänge überhaupt keine Periodizität.

Zusammengefasst beruht die Berechnung der Dauer der Injektorbestromung auf einer falschen Vorgabe, weswegen die Sollmenge der Kraftstoffeinspritzung verfehlt wird. Wie erwähnt, ist zwar der Fördergrad der Hochdruckpumpe einstellbar. Hierdurch ist jedoch eine Adaption nur auf ein Kollektiv mehrerer EinspritzVorgänge möglich; nicht aber das Nachstellen des Raildrucks für eine einzige unmittelbar anstehende Einspritzung.

Die Erfindung stellt daher eine Kompensationsmethode zur Verfügung, die in Form von zusätzlicher Software der Motorbetriebsstrategie hinzugefügt werden kann und unter Ausnutzung der vorhandenen Sensorik und Aktuatorik zu einer Verkleinerung der Abweichung zwischen dem Soll- und Istwert der Einspritzmenge führt und das in Bezug auf einzelne Einspritzungen.

Bei einer Verwendung der erfindungsgemässen Kompensationsmethode als Ergänzung zu der dem Stand der Technik entsprechenden Steuerung des Einspritzsystems muss der aufbereitete Raildruckwert als erster Druckwert bereits zu einem etwas früheren Zeitpunkt A als bei einem dem Stand der Technik entsprechenden System verfügbar sein, weil vor dem Abschalten des Injektorstroms einige nachfolgend erklärte zusätzliche Softwarefunktionen ausgeführt werden müssen.

Nach dem Stand der Technik erfolgt basierend auf dem zum Zeitpunkt A verfügbaren Raildruckwert eine bereits endgültige Berechnung des Injektorstrom-Abschaltzeitpunkts.

Bei der Erfindung hingegen erfolgt basierend auf dem zum Zeitpunkt A verfügbaren ersten Raildruckwert in einem ersten Ausführungsbeispiel die Berechnung einer ersten, vorläufigen Injektor-Öffnungsdauer und damit eines vorläufigen Zeitpunkts für die Injektorstrom-Abschaltung. Dieser Wert muss zum Zeitpunkt C verfügbar sein (vgl. Fig. 4). In einem zweiten Ausführungsbeispiel wird zum Zeitpunkt A dagegen lediglich der erste Raildruckwert bestimmt, ohne zunächst eine Injektor-Öffnungsdauer zu bestimmen.

Zu einem ebenfalls genau definierten Zeitpunkt D muss ein aufbereiteter aktualisierter zweiter Raildruckwert verfügbar sein. Für die Aufbereitung des zweiten Raildruckwerts wird anders als für den zum Zeitpunkt A verfügbaren ersten Raildruckwert eine wesentlich höhere Priorität auf einer kurzen Tasklaufzeit eingeräumt als auf die Exaktheit des Absolutwertes. Zum Zeitpunkt E liegt die zwischen den beiden eingelesenen Raildruckwerten bestehende Differenz dp vor. Zum Zeitpunkt F liegt ein aus den vorhandenen Daten berechneter Korrekturwert vor.

Zum Zeitpunkt G liegt der endgültig festgelegte Abschaltzeitpunkt des Injektorstroms vor.

Zur Verdeutlichung sei nochmals darauf hingewiesen, dass aus dem zum Zeitpunkt D erhobenen zweiten Raildruck-Wert gemäß dem im Folgenden ausführlich beschriebenen ersten Ausführungsbeispiel keine komplette Neuberechnung der Injektor-Öffnungsdauer und damit des Injektorstrom-Abschaltzeitpunkts erfolgt, sondern eine Berechnung eines Korrekturwertes, der dazu benutzt wird, unter Berücksichtigung der vorher *berechneten* ersten Injektor-Öffnungsdauer und damit des vorläufigen Abschaltzeitpunkts eine zweite, endgültige Injektor-Öffnungsdauer und damit einen endgültigen Abschaltzeitpunkt I zu bestimmen.

In einem zweiten Ausführungsbeispiel wird der zweite Druckwert, welcher zum Zeitpunkt D vorliegt, dagegen zur Korrektur des ersten Druckwertes eingesetzt, und erst nachfolgend aus dem korrigierten Druckwert die Injektor-Öffnungsdauer berechnet.

Die Aufbereitung des zum Zeitpunkt A verfügbaren ersten Raildruckwertes zielt primär auf eine hohe Genauigkeit ab, d.h. ein möglichst hohe Übereinstimmung des tatsächlich physikalisch vorliegenden Raildrucks und dem daraus ermittelten Digitalwert, wohingegen der Dauer der Signalaufbereitung eine untergeordnete Wichtigkeit zufällt. Bei dem zum Zeitpunkt D verfügbaren zweiten Raildruckwert kommt der Schnelligkeit der Signalaufbereitung die höhere Wichtigkeit zu.

Es hat sich nämlich gezeigt, dass eine Einsparung bestimmter Bearbeitungsschritte der Signalaufbereitung für den zum Zeitpunkt A an die Motorsteuerungssoftware zu übergebenden aufbereiteten ersten Raildruckwert zu einer deutlich höheren Streuung der Ist-Einspritzmengen in Bezug zu den Sollmengenführt, obwohl der hierfür relevante Zeitraum der Signalabtastung zu einem späteren Zeitraum erfolgen kann und sich somit der Zeitraum der Messwerterhebung stärker dem Zeitraum der Einspritzung annähert. Für den zur Berechnung des Korrekturwertes K an die Motorsteuerungssoftware zu übergebenden zweiten Raildruckwert zum Zeitpunkt D hat sich hingegen erwiesen, dass eine gezielte Einsparung bestimmter Bearbeitungsschritte der Signalaufbereitung und die dadurch ermöglichte spätere Signalabtastung zu einem Korrekturwert K führt, unter dessen Nutzung sich die Abweichung zwischen den Ist- und den Soll-Einspritzmengen verringert.

Eine sequentielle Abfolge von bevorzugten Bearbeitungsschritten, mit denen eine Signalaufbereitung für den zum Zeitpunkt A verfügbaren ersten Raildruckwert erfolgt, ist im Folgenden aufgeführt:
- Abtastung des Sensorsignals (Sample-and-Hold)
- Analog-Digital-Wandlung
- Einlesen der digitalen Eingangsgrösse in die Software
- Korrektur des Drucksignals aufgrund einer Abweichung zwischen dem Soll- und Istwert der Sensorversorgungsspannung
- Mittelwertbildung
- zusätzliche digitale Filterung
- Downsampling

Bei der Signalaufbereitung des zum Zeitpunkt D verfügbaren zweiten Raildruckwertes werden dagegen vorzugsweise folgende Bearbeitungsschritte eingespart:
- Korrektur des Drucksignals aufgrund einer Abweichung zwischen dem Soll- und Istwert der Sensorversorgungsspannung
- zusätzliche digitale Filterung
- Downsampling

Die übrigen Bearbeitungsschritte können dagegen in gleicher Weise durchgeführt werden wie für den ersten Druckwert.

Um den Vorteil der schnelleren Signalauswertung ausschöpfen zu können, muss der Zeitraum der Signalabtastung zu einem späten Zeitraum erfolgen; idealerweise um den Zeitraum, der die Verfügbarkeit des digitalen zweiten Raildruckwertes zum Zeitpunkt D gerade noch ermöglicht.

In einer bevorzugten Ausführung wird für die Berechnung der Raildruckwerte-Differenz dp, die zur Bestimmung des Korrekturwertes K benötigt wird, nicht der zuvor besonders aufwendig aufbereitete zum Zeitpunkt A verfügbare erste Raildruckwert verwendet, sondern ein dritter Raildruckwert, der mit einer Aufbereitung ermittelt wird, welche derjenigen gleicht und bevorzugt identisch zu jener Aufbereitung ist, auf der der zum Zeitpunkt D eingelesene zweite Raildruck-Wert beruht.

Es besteht die Möglichkeit die beiden Werte, die den Raildruck vor dem Einspritzbeginn quantifizieren, d.h. den ersten und den dritten Raildruck, in einer gemeinsamen Signalabtastung zu erheben. Das wäre einerseits vorteilhaft, weil es sich dann um zwei Digitalwerte handelt, die sich lediglich - wie gewünscht - in der Art ihrer Signalaufbereitung unterscheiden. Andererseits müsste in diesem Fall die Signalabtastung um die Tasklaufzeit, die die hinzukommende Signalaufbereitung benötigt, früher vorgenommen werden.

Die prinzipielle Möglichkeit, die Signalabtastungen, mit denen die Raildruckwerte vor der Einspritzung quantifiziert werden sollen, zu separieren und davon den dritten Raildruckwert mit der schnellen Aufbereitung im Anschluss an die beiden Signalabtastungen durchzuführen, ist ungünstig.

Die verbleibende Möglichkeit die Signalabtastungen, mit denen die Raildruckwerte vor der Einspritzung quantifiziert werden sollen, zu separieren und dabei den dritten Raildruckwert mit der schnellen Aufbereitung bereits ermittelt zu haben, bevor die Signalabtastung zur Generierung des aufwendig aufzubereiteten ersten Raildruckwerts einsetzt, weist den Vorteil auf, dass die letztgenannte Signalabtastung nicht nochmals zeitlich weiter von der Einspritzung entfernt erfolgt.

Der Vorteil dieser bevorzugten Ausführung liegt darin, dass die berechnete Druckdifferenz dp auf zwei Druckwerten basiert, die weitestgehend denselben Störungen unterliegen. Als Folge davon herrscht zwischen der Differenz der physikalisch vorliegenden Raildrücke und dem Digitalwert, der zur Berechnung des Korrekturwertes K berechnet wird, eine höhere Übereinstimmung.

Ein einfaches Beispiel hierfür ist das thermisch bedingte Driften der Versorgungsspannung des Drucksensors. Zur Bestimmung eines präzisen Absolutwertes ist eine Kompensation dieser Störung oder eine Korrekturrechnung der durch diese Störung hervorgerufenen Verfälschung sinnvoll. Für eine Druckdifferenz ergibt sich eine weitaus geringere Verfälschung, wenn beide Druckwerte dieser Störung unterworfen sind als für den Fall, dass nur für einen der beiden Druckwerte eine Korrekturrechnung vorliegt.

Im Folgenden soll noch einmal eine Übersicht der qualitativ eingetragenen Zeitpunkte für die einzelnen Verfahrensschritte gegeben werden:
A: Verfügbarkeit des aufbereiteten ersten Raildruckwertes (Priorität auf der Genauigkeit des Absolutwertes)
B: Beginn der Injektor-Bestromung
C: Verfügbarkeit des vorläufig festgelegten Zeitpunkts der Injektorstromabschaltung
D: Verfügbarkeit des aufbereiteten zweiten Raildruckwertes (Priorität auf geringer Tasklaufzeit, um eine späte Signalabtastung zu ermöglichen)
E: Verfügbarkeit der Druckdifferenz dp
F: Verfügbarkeit des Korrekturwertes K
G: Verfügbarkeit des massgeblichen Zeitpunkts für die Injektorstromabschaltung
H: frühestmöglicher Zeitpunkt an dem nach der massgeblichen Festlegung der Injektorstrom tatsächlich abgeschaltet werden kann.
I: Abschalten des Injektorstroms wie zum Zeitpunkt G festgelegt

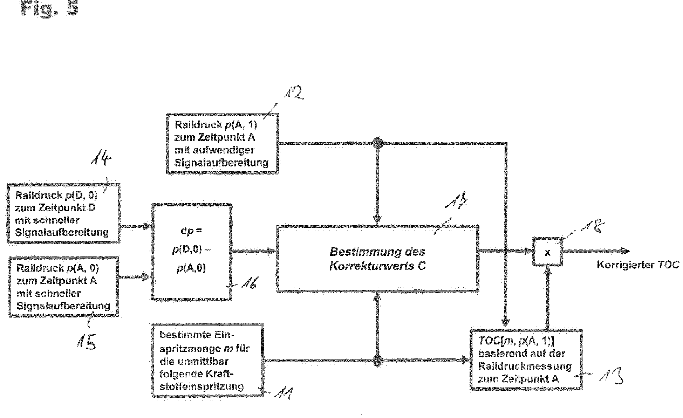

Fig. 5 zeigt ein abstrahiertes Blockdiagramm zu dem ersten Ausführungsbeispiel der Erfindung in der zuvor beschriebenen bevorzugten Ausführungsform.

Die Funktion zur Bestimmung des TOC-Wertes übernimmt zunächst in Block 11 die Kraftstoff-Sollmenge für die nachfolgende Einspritzung von der Motorsteuerungsstrategie und bestimmt in Block 12 den ersten Druckwert des Raildrucks mittels einer aufwendigen Signalaufbereitung. In Block 13 erfolgt eine Berechnung eines ersten TOC-Wertes über die maßgeblichen Eingangsgrössen der Kraftstoff-Sollmenge der nachfolgenden Einspritzung und den präzisen ersten Wert des zeitlich möglichst unmittelbar dem Einspritzbeginn vorausgehenden Raildrucks.

Bei der erfindungsgemässen Methode handelt es sich bei dem auf diese Weise ermittelten ersten TOC nur um einen vorläufig festgelegten Wert. Die erfindungsgemässe Festlegung des tatsächlich zur Bestromung des Injektors benutzten zweiten TOC-Werts erfolgt durch eine weitere Funktion, im Folgetext als Korrekturfunktion 17 bezeichnet. Diese Korrekturfunktion 17 erzeugt einen Korrekturwert, insbesondere in Form eines Korrekturfaktors, mittels welchen der erste TOC-Wert in Block 18 zur Bereitstellung des finalen zweiten TOC-Wertes korrigiert wird.

Die Korrekturfunktion 17 weist eine Abhängigkeit von einem zweiten Druckwert einer nochmaligen zeitlich späteren, d.h. aktualisierten Raildruckmessung 14, die vorzugsweise erst während der Einspritzung stattfindet, auf.

Diese nochmalige Raildruckmessung 14 hat im Ausführungsbeispiel keinen Einfluss auf den vorläufig berechneten ersten TOC-Wert, sondern übt ihren Einfluss auf den endgültig festzulegenden zweiten TOC-Wert über die Korrekturfunktion 17 aus. Deshalb muss mit dem aktualisierten zweiten Raildruckwert nicht der gesamte die Einspritzung bestimmende Teil der Motorsteuerungssoftware abgearbeitet werden.

Der zweite Druckwert geht in Form einer Druckdifferenz dp in die Korrekturfunktion 17 ein. Hierfür wird in Block 15 unmittelbar vor dem Zeitpunkt A der Ermittlung des ersten Druckwerts ein dritter Druckwert ermittelt, welcher in gleicher Weise aufbereitet wird wie der zweite Druckwert. In Block 16 wird die Druckdifferenz zwischen dem zweiten und dem dritten Druckwert gebildet und der Korrekturfunktion 17 übergeben.

Im Ausführungsbeispiel weist die Korrekturfunktion 17 weiterhin eine Abhängigkeit von dem ersten Raildruckwert, der massgeblich für die Festlegung des vorläufigen ersten TOC-Wertes ist, auf. Ausserdem kann die Korrekturfunktion eine Abhängigkeit von der bereits festgelegten Kraftstoff-Sollmenge der nachfolgenden Einspritzung aufweisen.

Damit die aktualisierte zweite Raildruckmessung möglichst spät, d.h. möglichst nahe dem frühestmöglichen Abschaltzeitpunkt des Injektorstroms durchgeführt werden kann, muss - wie ausführlich dargelegt - die Aufbereitung des daraus hervorgehenden aktualisierten zweiten Raildruckwertes eine möglichst niedrige Tasklaufzeit aufweisen und muss die Korrekturfunktion derart konzipiert sein, dass die Summe der Tasklaufzeiten ihrer Abarbeitung und der Korrekturrechnung möglichst kurz sind. (Diese Formulierung mit dem bewusst gewählten Begriff Tasklaufzeit impliziert, dass die maximal benötigte Rechenzeit möglichst niedrig ist.)

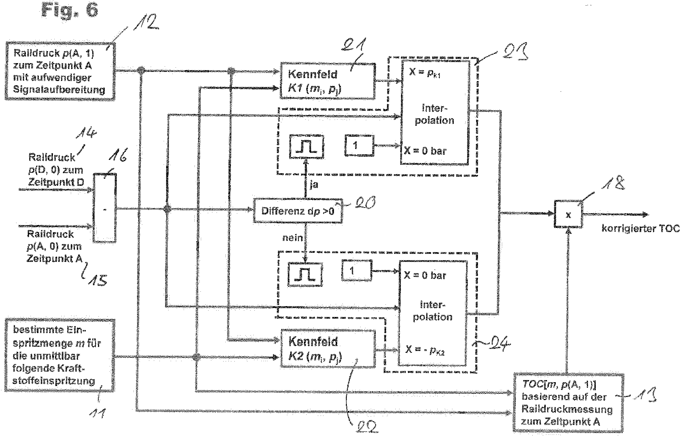

Fig. 6 zeigt das bereits in Fig. 5 gezeigte Ablaufschema ergänzt durch eine mögliche Umsetzung einer im Hinblick auf die Tasklaufzeit optimierten Korrekturfunktion 17. Im Hinblick auf die übrigen Funktionen und Blöcke wird daher zunächst auf die obige Beschreibung von Fig. 5 verwiesen.

Im Ausführungsbeispiel wird der zur Bestromung massgebliche TOC-Wert in Block 18 durch eine Multiplikation des zuvor berechneten vorläufigen ersten TOC-Wertes mit einem durch die Korrekturfunktion bestimmten Korrekturwert ermittelt. Ein Korrekturwert von 1 entspricht daher keiner Änderung.

Die Korrekturfunktion 17 weist eine Fallunterscheidung 20 auf. Das Entscheidungskriterium ist abhängig von dem aktualisierten zweiten Raildruckwert, der zum Zeitpunkt D verfügbar ist. Daher kann die Fallunterscheidung 20 erst vergleichsweise spät aufgelöst werden.

In beiden Pfaden der Fallunterscheidung ist ein Kennfeld K1, K2 hinterlegt. Die zwei Eingangsgrössen beider Kennfelder sind der vergleichsweise frühzeitig gemessene zum Zeitpunkt A verfügbare erste Raildruckwert und der nochmals früher verfügbare Sollwert der Einspritzmenge für die unmittelbar folgende Kraftstoffeinspritzung. Daher werden beide Kennfelder K1 und K2 in Blöcken 23 bzw. 24 vor dem Zeitpunkt D, zu welchem der zweite Druckwert zur Verfügung steht, ausgelesen.

Zur Berechnung des Korrekturfaktors wird zwar letztlich nur der Ausgangswert von einem der beiden Kennfelder 21, 22 benötigt. Da das Auslesen beider Kennfelder vorgezogen wird, kann die zweite Raildruck-Messwertaufnahme, d.h. die entsprechende Signalabtastung zur Bereitstellung des aktualisierten zweiten Raildruckwertes um die Zeitdauer, die der Tasklaufzeit zum Auslesen eines Kennfeldes entspricht, verschoben werden.

Dieses Prinzip kann selbstverständlich auch dann angewendet werden, wenn es sich um eine Fallunterscheidung mit mehr als zwei Fällen handelt oder keine Fallunterscheidung vorgenommen wird. Dieses Prinzip kann selbstverständlich auch dann angewendet werden, wenn anstelle eines Kennfeldes eine Rechenvorschrift etc. abgearbeitet werden muss.

Kennzeichnend ist die Strategie, dass bei der Ermittlung des Korrekturfaktors ein Teil der Berechnungsroutine bereits ausgeführt worden ist, bevor der aktualisierte zweite Wert des Raildrucks verfügbar ist.

Im Ausführungsbeispiel erfolgt dies durch Auslesen eines Wertes aus einem Kennfeld K1, K2 anhand des ersten Druckwertes und der Soll-Einspritzmenge.

Die Bestimmung des Korrekturfaktors erfolgt dann durch Interpolationsfunktionen 23, 24, welche den aus dem jeweiligen Kennfeld ausgelesenen Wert auf Grundlage der Druckdifferenz dp anpassen. Der aus dem Kennfeld ausgelesene Wert entspricht im Ausführungsbeispiel einem Korrekturfaktor für einen vorgegebenen Wert p_{K1} bzw. p_{K2} der Druckdifferenz dp, und wird nun an die tatsächlich mittels des zweiten und dritten Druckwertes bestimmte Druckdifferenz angepasst, insbesondere mittels Interpolation.

Die Interpolation soll anhand des folgenden Beispiels veranschaulicht werden, welches unter der Annahme dp ≥ 0 beschrieben wird. Im angenommenen Beispiel beträgt der Sollwert der anstehenden Einspritzung 150 mg und der zum Zeitpunkt A verfügbare erste Raildruck hat den Wert p_{b}. Der sich daraus ergebende Ausgangswert des Korrekturkennfeldes K1 wird bevorzugt bereits vor dem Zeitpunkt D bestimmt und hat im gegebenen Beispiel den Wert 1.6.

Unter der Annahme, dass die zum Zeitpunkt A und der zum Zeitpunkt D verfügbaren dritten und zweiten Raildruckwerte gleich sind, d.h. dp = 0, dann findet der Ausgangswert der Korrekturmatrix keine Beachtung. Der Ausgangswert des Blocks 23, d.h. der Korrekturwert, hat sodann den Wert 1.

Unter der Annahme, dass die Grösse dp einen festgelegten Schwellenwert p_{K1} erreicht oder überschreitet, dann ergibt sich ein Korrekturwert von 1.6. Bei einem Überschreiten des Schwellwertes wird der aus dem Kennfeld ausgelesene Wert daher ohne Extrapolation als Korrekturwert eingesetzt.

Unter der Annahme, dass die Grösse dp einen Wert zwischen 0 und dem Schwellwert p_{K1} aufweist, erfolgt eine lineare Interpolation zwischen dem Wert 1 und dem Korrekturkennfeld-Ausgangswert 1.6. Sofern die Grösse dp bspw. 10 % des Schwellenwertes p_{K1} aufweist, ergibt die lineare Interpolation den Wert von 1.06. In diesem Fallbeispiel wird der vorläufig festgelegte TOC-Wert mit einem Faktor von 1.06 multipliziert.

Die Schwellenwerte p_{K1}, p_{K2} sind im Parametersatz der Motorsteuerung abgelegt.

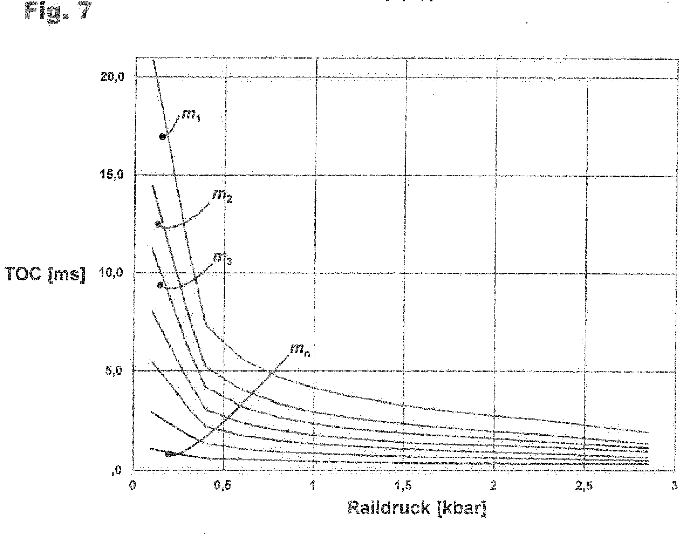

Fig. 7 zeigt ein exemplarisches Injektor-Kennfeld, gemeinhin als Finger Print bezeichnet, wie es zur Berechnung des TOC-Wertes in Block 13 zum Einsatz kommen kann. Die darin dargestellten Kurven zeigen Iso-Massenlinien. Diese beziehen sich auf die Gesamtmenge an Kraftstoff, der im Zeitraum einer Einspritzung dem Brennraum einer Verbrennungskraftmaschine zugeführt wird. Aus Sicht der Motorsteuerung legt die berechnete Sollmenge der unmittelbar folgenden Einspritzung die Iso-Massenlinie fest. Sobald der Raildruckwert verfügbar ist, ergibt sich der erforderliche TOC-Wert. Für jeden Injektor befindet sich in der Motorsteuerung ein die Finger-Print-Kennlinien beinhaltender Parametersatz wodurch bei bekannten Eingangsgrössen der TOC-Wert festgelegt ist.

Ein Parametersatz, durch welchen ein solches Kennfeld beschrieben werden kann, kann beispielsweise in Form einer Wertetabelle vorliegen. In einer Spalte einer solchen Wertetabelle sind jeweils die TOC-Stützpunkte für unterschiedliche Kraftstoffmengen und einen fest beibehaltenen Raildruckwert eingetragen. In einer Zeile sind jeweils die TOC-Stützpunkte für eine feste beibehaltene Kraftstoffmenge und für die unterschiedlichen Raildruckwerte eingetragen.

Das Kennfeld zur Bestimmung des TOC-Wertes kann weiterhin zur Berechnung eines Kennfeldes K1 bzw. K2 herangezogen werden, aus welchem ein Wert zur Bestimmung des Korrekturfaktors ausgelesen wird. Hierzu wird ein weiterer Parametersatz erstellt, dessen Stützpunkte auf denselben Kraftstoffmengen-Werten beruhen. In Bezug auf den Raildruckwert liegen zwischen zwei Stützpunkten weiterhin dieselben Druckunterschiede wie im eigentlichen Kennfeld vor; jedoch sind im zweiten Kennfeld die jeweiligen Druckeinträge aller Stützpunkte um eine jeweils gleiche Druckwertdifferenz p_{K2} reduziert. Das hat zur Folge, dass die Werte der TOC-Einträge an jeweils gleichen Positionen im zweiten Kennfeld grösser sind.

Aus diesen beiden Kennfeldern kann das Korrekturkennfeld bestimmt werden. Das Raster zwischen den Raildruckwerten und Kraftstoffmengen entspricht dem der Kennfelder für den TOC-Wert. Bei dem Raster handelt es sich bevorzugt um kein äquidistantes Raster. Ursache hierfür ist, dass die Kennfelder nichtlinear sind und man daher unter Beibehaltung einer bestimmten Anzahl von Stützpunkten mit einer geschickten Auswahl eine wesentlich höhere Genauigkeit erzielen kann.

In dem Korrekturkennfeld beziehen sich die Stützpunkte jeweils auf die Kraftstoffmengen und Raildruckwerte, wie in dem zuerst erklärten Kennfeld zur Bestimmung des TOC. In dem Korrekturkennfeld entsprechen die Einträge an einem Stützpunkt K(mᵢ, pⱼ) dem jeweiligen Quotienten der Einträge des erstgenannten Kennfeldes, dem sogenannten Finger-Print-Kennfeld, und dem zweiten Kennfeld, bei dem die TOC-Werte in jedem Stützpunkt um eine feste Druckwertdifferenz p_{K2} verschoben sind.

In Bezug auf die Fig. 6 deckt das zur Erklärung herangezogene Korrekturkennfeld K2 den im Fall dp < 0 ab, d.h. eine Abnahme des Raildrucks von der zur Bestimmung des vorläufigen TOC-Wertes dienenden ersten Raildruckwertes, der zum Zeitpunkt A verfügbar sein muss, und dem aktualisierten zweiten Raildruckwert, der zum Zeitpunkt D verfügbar sein muss. Bei dem zur Abdeckung des anderen Falls verwendeten Korrekturkennfeld K1 bleiben bei der Berechnung der Stützpunkte die Dividenden gleich wie beim Korrekturkennfeld K2, jedoch wird bei den Divisoren ein Kennfeld eingesetzt, bei welchem die Einträge jeweils dem TOC-Wert für einen um eine konstante Druckwertdifferenz p_{K1} erhöhten Druckwert entsprechen, verwendet.

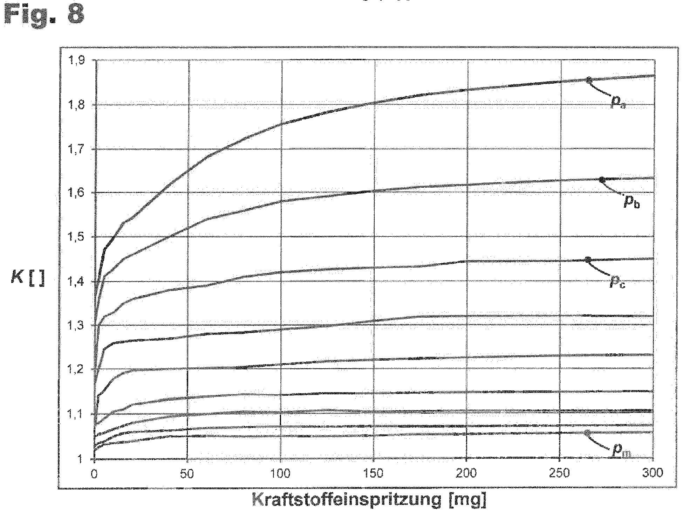

Die Fig. 8 zeigt eine exemplarische Darstellung eines Korrekturkennfeldes K2. Da es sich sowohl bei dem Dividend und dem Divisor jeweils um Zeitgrössen handelt, ist der Ausgangswert des Korrekturkennfeldes dimensionslos.

Bei dem anhand der Figuren 5 bis 8 dargestellten ersten Ausführungsbeispiel der vorliegenden Erfindung erfolgt zunächst auf Grundlage des ersten Druckwertes eine Bestimmung einer ersten Injektor-Öffnungsdauer, welche dann anhand des zweiten Druckwertes korrigiert wird.

Die vorliegende Erfindung ist jedoch nicht auf eine solche Ausgestaltung beschränkt.

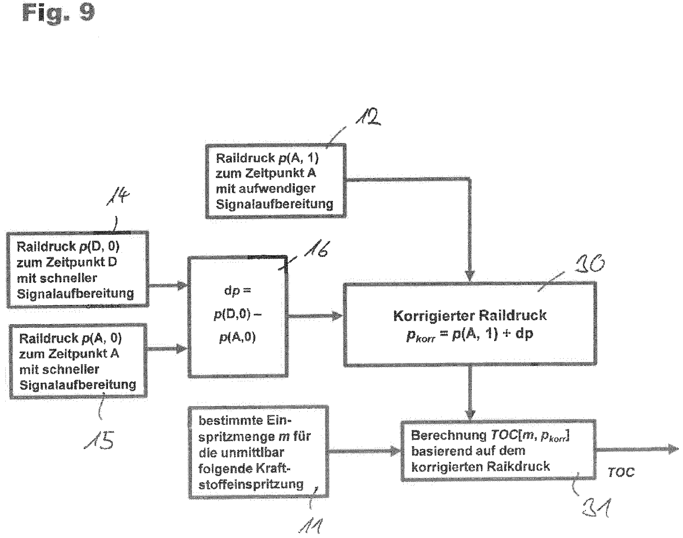

Fig. 9 zeigt in Form eines Blockschemas ein zweites Ausführungsbeispiel der vorliegenden Erfindung, bei welchem der zweite Druckwert nicht zur Korrektur einer zuvor bestimmten Injektor-Öffnungsdauer, sondern zur Korrektur des ersten Druckwertes herangezogen wird. Die Injektor-Öffnungsdauer wird dann erst auf Grundlage des korrigierten Druckwertes bestimmt.

Die Blöcke 11, 12 sowie 14 bis 16 entsprechen dem in Fig. 5 gezeigten ersten Ausführungsbeispiel, so dass auf die obigen Ausführungen verwiesen wird. Diese stellen den ersten Druckwert p(A,1), die Einspritzmenge m und die Druckdifferenz dp zur Verfügung.

Bei dem in Fig. 9 dargestellten Ausführungsbeispiel ist eine Korrekturfunktion vorgesehen, welche in Block 30 den ersten Druckwert p(A,1) um die Druckdifferenz dp zwischen dem zweiten Druckwert p(D,0) und dem dritten Druckwert p(A,0) korrigiert, d.h. pₖₒᵣᵣ = p(A,1) + dp = p(A,1) + (p(D,0) - p(A,0)). Die Druckdifferenz bildet bei diesem Ausführungsbeispiel daher selbst den Korrekturwert und wird zu dem ersten Druckwert hinzuaddiert.

Die endgültige Injektor-Öffnungsdauer TOC wird dann in Block 31 unmittelbar aus dem TOC-Kennfeld mittels des korrigierten Druckwertes pₖₒᵣᵣ und der Soll-Einspritzmenge m ausgelesen, d.h. als TOC[m, pₖₒᵣ].

Die vorliegende Erfindung erlaubt eine erhebliche Verbesserung in der Genauigkeit der tatsächlich eingespritzten Kraftstoffmenge. Im Folgenden wird dies durch Messreihen, welche mit dem ersten Ausführungsbeispiel der vorliegenden Erfindung erstellt wurden, belegt.

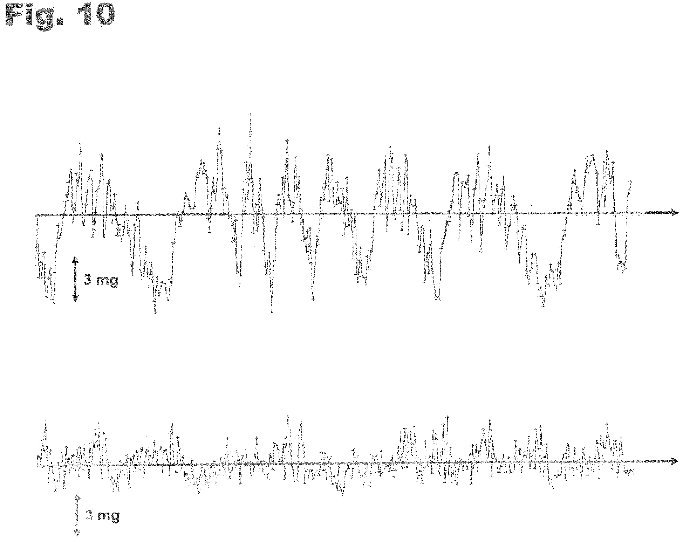

In Fig. 10 zeigen beide Diagramme jeweils exemplarisch für einen Injektor das Betriebsverhalten eines Common Rail Systems für den Fall einer stationär arbeitenden Verbrennungskraftmaschine. Zur hochpräzisen Messung der entsprechenden Istmengen der einzelnen Kraftstoff-Einspritzungen wurden die den Diagrammen zugrunde liegenden Messreihen nicht in einer gefeuerten Verbrennungskraftmaschine, sondern in einem an einem Prüfstand betriebenen Common Rail System ohne Verbrennung des durch die Spritzlöcher hindurchgeleiteten Kraftstoffs ausgeführt. Die für das Common Rail System relevanten Umgebungsbedingungen wurden am Prüfstand emuliert. Bei der dem Diagramm zugrunde gelegten Versuchsdurchführung beträgt die Drehzahl der Hochdruckpumpe 1000 Umdrehungen pro Minute und die Kraftstoff-Sollmenge pro Einspritzvorgang bei 250 mg. Die Abszisse entspricht der Zeit und gleichzeitig der Nummer des betrachteten Einspritzvorgangs. Längs der Ordinate sind die Werte der jeweils tatsächlich eingespritzten Kraftstoffmengen eingetragen.

Übereinstimmend ist in den beiden Versuchsreihen jeder in den Diagrammen dokumentierte Einspritzvorgang bei demselben Kurbelwellenwinkel ausgelöst worden. Das obere Diagramm zeigt die Istwerte der Kraftstoffeinspritzung ohne Anwendung der erfindungsgemässen Kompensationsmethode. Im unteren Diagramm sind die entsprechenden Kraftstoffmengen unter Einsatz der erfindungsgemässen Kompensationsmethode unter ansonsten gleichen Versuchsbedingungen eingetragen.

Bei einem Vergleich der Ergebnisse aus den beiden Versuchsreihen fällt besonders auf, dass die erfindungsgemässe Kompensationsmethode ganz offensichtlich vor allem die besonders starken Abweichungen zu den Sollwerten verhindert. Aber auch im Kollektiv haben sich die Abweichungen etwa um einen Faktor zwischen zwei bis drei reduziert.

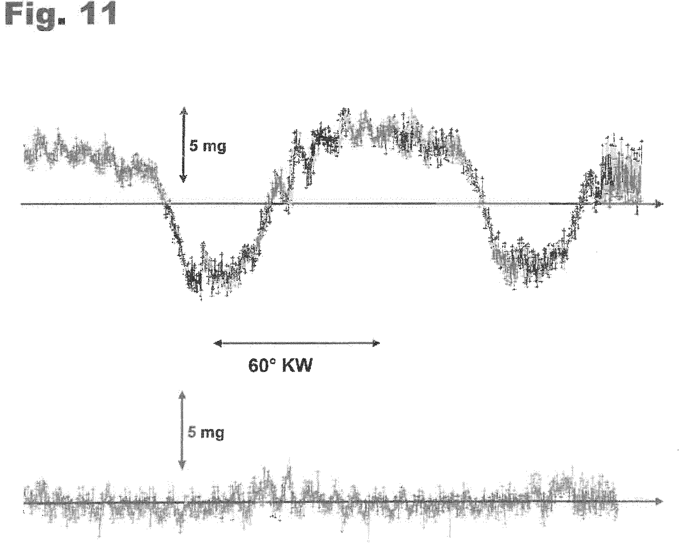

In Fig. 11 zeigen die beiden Diagramme in gleicher Weise das Betriebsverhalten eines Common Rail Systems. Die Drehzahl der Hochdruckpumpe beträgt 1000 Umdrehungen pro Minute und die zuzuführende Kraftstoff-Sollmenge 200 mg pro Einspritzvorgang. Im Unterschied zu den auf der vorausgegangenen Fig. 10 dargestellten Diagrammen wurde eine bewusst herbeigeführte Variation des Einspritzbeginns vorgenommen. In Bezug auf die Zeitdauer zwischen zwei Einspritzungen wurde eine absichtliche Änderung des Einspritzbeginns langsam hervorgerufen. Auf diese Weise ist in dem oberen Diagramm, welches auf einer Messwerterhebung ohne Anwendung der erfindungsgemäßen Kompensation basiert, ein systematisches Driften der Istwerte erkennbar. Denn pro Umdrehung ihrer Welle erfolgen an der verwendeten Hochdruckpumpe zwei Kolbenhübe. Im Versuchsaufbau befanden sich sechs Injektoren und es lag eine Synchronisation zwischen den Kolbenhüben der Hochdruckpumpe und den einzelnen Einspritzungen vor. Das Diagramm zeigt die Einspritzwerte für einen der sechs Injektoren. Daher liegen zwischen zwei Messpunkten drei Umdrehungen der Hochdruckpumpenwelle vor. Durch diese Konfiguration lässt sich durch die Änderung des Einspritzbeginns die deutlich zu erkennende reproduzierbare Störung auf den Versuchsaufbau ausüben. Wie im unteren Diagramm deutlich zu erkennen wird diese Störung durch die Erfindung wirkungsvoll abgeschwächt.

Besonders hohe Dynamikanforderungen bestehen in vielen Anwendungen im Bereich Mobiler Arbeitsmaschinen. Die in diesem Bereich zum Einsatz kommenden Dieselmotoren werden als sogenannte Off Road Motoren klassifiziert. Diese unterliegen einer eigenen Abgasgesetzgebung. Die darin festgeschriebenen Abgasgrenzwerte basieren auf einem standardisierten Testzyklus, dem NRTC (Non Road Transient Cycle). Die vorliegende Erfindung ermöglicht durch die genaue Kontrolle der Einspritzmenge eine erhebliche Verbesserung auch im Bereich der durch den Motor erzeugten Abgase.

## Patentansprüche

1. Verfahren zum Betrieb eines Verbrennungsmotors, welcher einen ansteuerbaren Injektor zum Einspritzen von Kraftstoff in einen Verbrennungsraum aufweist, wobei der Injektor mit einem Kraftstoffspeicher in Verbindung steht, durch welchen er mit Kraftstoff versorgt wird, mit den Schritten:
- Bestimmen eines ersten Druckwertes des Drucks im Kraftstoffspeicher auf Grundlage einer ersten Druckmessung,
- Bestimmen eines zweiten Druckwertes des Drucks im Kraftstoffspeicher auf Grundlage einer nach der ersten Druckmessung erfolgenden zweiten Druckmessung,
- Bestimmen einer Injektor-Öffnungsdauer in Abhängigkeit von dem ersten und dem zweiten Druckwert und
- Ansteuerung des Injektors auf Grundlage der zuvor bestimmten Injektor-Öffnungsdauer,
**dadurch gekennzeichnet,**
**dass** die Bestimmung des ersten und des zweiten Druckwertes durch unterschiedliche Auswertungsverfahren erfolgt, wobei ein zur Bestimmung des zweiten Druckwertes eingesetztes zweites Auswertungsverfahren schneller arbeitet als ein zur Bestimmung des ersten Druckwertes eingesetztes erstes Auswertungsverfahren.

2. Verfahren nach Anspruch 1, wobei die erste Druckmessung vor dem Öffnen des Injektors erfolgt und/oder die zweite Druckmessung nach dem Öffnen des Injektors erfolgt.

3. Verfahren nach Anspruch 1 oder 2, wobei die zuvor bestimmte Injektor-Öffnungsdauer herangezogen wird, um den Schließzeitpunkt für den Injektor festzulegen.

4. Verfahren nach Anspruch 3, wobei zur Bestimmung des ersten Druckwertes mindestens einer der folgenden Verfahrensschritte durchgeführt wird, während die Bestimmung des zweiten Druckwertes ohne diesen Schritt erfolgt:
- Korrektur des Druckmesswertes ihm Hinblick auf eine Variation der Versorgungsspannung und/oder Temperatur;
- Down-Sampling;
- digitale Filterung.

5. Verfahren nach einem der vorangegangenen Ansprüche, wobei zunächst eine erste Injektor-Öffnungsdauer in Abhängigkeit von dem ersten Druckwert bestimmt wird und nach dem Vorliegen des zweiten Druckwertes eine Korrektur der ersten Injektor-Öffnungsdauer in Abhängigkeit von dem zweiten Druckwert vorgenommen wird.

6. Verfahren nach Anspruch 5, wobei die Korrektur der ersten Injektor-Öffnungsdauer von der gewünschten Einspritzmenge und/oder dem Druck im Speicher abhängt und/oder mittels eines Kennfeldes erfolgt, welches von der gewünschten Einspritzmenge und/oder dem Druck im Speicher abhängt.

7. Verfahren nach Anspruch 6, wobei zur Korrektur der ersten Injektor-Öffnungsdauer ein Korrekturwert aus einem Kennfeld ausgelesen wird, wobei der Korrekturwert auf Grundlage des ersten Druckwertes ausgelesen wird, bevor der zweite Druckwert bestimmt wurde, und der Korrekturwert nach dem Auslesen auf Grundlage des zweiten Druckwertes angepasst wird, insbesondere skaliert wird.

8. Verfahren nach einem der vorangegangenen Ansprüche, wobei die Bestimmung der Injektor-Öffnungsdauer und insbesondere die Korrektur der ersten Injektor-Öffnungsdauer in Abhängigkeit von einer Druckdifferenz aus dem zweiten Druckwert und einem dritten Druckwert erfolgt, wobei bevorzugt die Bestimmung des zweiten und des dritten Druckwertes durch Anwendung des gleichen Auswertungsverfahrens erfolgen.

9. Verfahren nach Anspruch 8, wobei der dritte Druckwert auf Grundlage der ersten Druckmessung und/oder auf Grundlage einer dritten Druckmessung bestimmt wird, wobei die dritte Druckmessung bevorzugt in unmittelbarer zeitlicher Nähe zu der ersten Druckmessung und/oder vor der ersten Druckmessung erfolgt, wobei die Bestimmung des ersten Druckwertes bevorzugt unmittelbar nach der Bestimmung des dritten Druckwertes erfolgt.

10. Verfahren nach einem der vorangegangenen Ansprüche, wobei die zweite Druckmessung und/oder die Bestimmung des zweiten Druckwertes zu einem in Bezug auf den Öffnungszeitpunkt des Injektors fest vorgegebenen Zeitpunkt erfolgt, wobei der Zeitpunkt insbesondere unabhängig von einer gewünschten Einspritzmenge fest vorgegeben ist, oder wobei die zweite Druckmessung und/oder die Bestimmung des zweiten Druckwertes zu einem in Bezug auf den Öffnungszeitpunkt des Injektors variablen Zeitpunkt erfolgt, wobei der Zeitpunkt insbesondere in Abhängigkeit von einer gewünschten Einspritzmenge für den jeweiligen Öffnungsvorgang des Injektors bestimmt wird.

11. Verfahren nach einem der vorangegangenen Ansprüche, wobei der Verbrennungsmotor einen gemeinsamen Kraftstoffspeicher für eine Mehrzahl von Injektoren aufweist, welche unterschiedlichen Brennräumen zugeordnet sind, und/oder wobei der Verbrennungsmotor eine Mehrzahl von Injektoren aufweist, wobei die Bestimmung der Injektor-Öffnungsdauer für jeden Injektor individuell erfolgt.

12. Verfahren nach einem der vorangegangenen Ansprüche, wobei der Verbrennungsmotor eine Pumpe zur Erzeugung eines variablen Soll-Drucks im Kraftstoffspeicher aufweist, wobei anhand von Motorbetriebsparametern und/oder einer Benutzervorgabe eine Festlegung des Soll-Drucks und einer gewünschten Einspritzmenge erfolgt, wobei die Injektor-Öffnungsdauer in Abhängigkeit von der gewünschten Einspritzmenge bestimmt wird.

13. Motorsteuerungssoftware mit Befehlen zur Durchführung eines Verfahrens nach einem der vorangegangenen Ansprüche auf einer Motorsteuerung mit Mitteln geeignet zur Ausführung des Verfahrens.

14. Verbrennungsmotor mit einem ansteuerbaren Injektor zum Einspritzen von Kraftstoff in einen Verbrennungsraum und mit einem Kraftstoffspeicher, mit welchem der Injektor in Verbindung steht und durch welchen er mit Kraftstoff versorgt wird, und mit einem Drucksensor zur Messung des Drucks im Kraftstoffspeicher, wobei der Verbrennungsmotor eine Motorsteuerung aufweist, welche programmiert ist, folgende Schritte durchzuführen:
- Bestimmen eines ersten Druckwertes des Drucks im Kraftstoffspeicher auf Grundlage einer ersten Druckmessung,
- Bestimmen eines zweiten Druckwertes des Drucks im Kraftstoffspeicher auf Grundlage einer nach der ersten Druckmessung erfolgenden zweiten Druckmessung,
- Bestimmen einer Injektor-Öffnungsdauer in Abhängigkeit von dem ersten und dem zweiten Druckwert und
- Ansteuerung des Injektors auf Grundlage der zuvor bestimmten Injektor-Öffnungsdauer,
**dadurch gekennzeichnet,**
**dass** die Bestimmung des ersten und des zweiten Druckwertes durch unterschiedliche Auswertungsverfahren erfolgt, wobei ein zur Bestimmung des zweiten Druckwertes eingesetztes zweites Auswertungsverfahren schneller arbeitet als ein zur Bestimmung des ersten Druckwertes eingesetztes erstes Auswertungsverfahren.

15. Verbrennungsmotor nach Anspruch 14, wobei die Motorsteuerung programmiert ist, ein Verfahren nach einem der Ansprüche 1 bis 12 durchzuführen.

## Claims

1. Method of operating an internal combustion engine comprising a controllable injector for injecting fuel into a combustion chamber, wherein the injector communicates with a fuel accumulator through which it is supplied with fuel, the method comprising the following steps:
- determining a first pressure value of the pressure in the fuel accumulator on the basis of a first pressure measurement,
- determining a second pressure value of the pressure in the fuel accumulator on the basis of a second pressure measurement carried out after the first pressure measurement,
- determining an injector opening duration depending on the first and the second pressure value, and
- controlling the injector based upon the previously determined injector opening duration,
**characterized in that**
the determination of the first and of the second pressure value is effected by different evaluation methods, wherein a second evaluation method used to determine the second pressure value operates faster than a first evaluation method used to determine the first pressure value.

2. Method according to claim 1, wherein the first pressure measurement is carried out before the injector is opened and/or the second pressure measurement is carried out after the injector has been opened.

3. Method according to claim 1 or 2, wherein the previously determined injector opening duration is used to set the closing time for the injector.

4. Method according to claim 3, wherein at least one of the following method steps is carried out for determining the first pressure value, while the determination of the second pressure value is carried out without this step:
- correction of the pressure measurement value with respect to a variation of the supply voltage and/or temperature;
- down-sampling;
- digital filtering.

5. Method according to one of the preceding claims, wherein a first injector opening duration is first determined depending on the first pressure value and, when the second pressure value is available, a correction of the first injector opening duration is carried out depending on the second pressure value.

6. Method according to claim 5, wherein the correction of the first injector opening duration depends on the desired injection quantity and/or the pressure in the accumulator and/or is effected by means of a characteristic map, which depends on the desired injection quantity and/or the pressure in the accumulator.

7. Method according to claim 6, wherein, for correcting the first injector opening duration, a correction value is read out from a characteristic map, wherein the correction value is read out on the basis of the first pressure value before the second pressure value has been determined, and wherein, after having been read out, the correction value is adapted, in particular scaled, on the basis of the second pressure value.

8. Method according to one of the preceding claims, wherein the determination of the injector opening duration and in particular the correction of the first injector opening duration are carried out depending on a pressure difference between the second pressure value and a third pressure value, wherein the second and the third pressure values are preferably determined by applying the same evaluation method.

9. Method according to claim 8, wherein the third pressure value is determined on the basis of the first pressure measurement and/or on the basis of a third pressure measurement, wherein the third pressure measurement is preferably carried out in close temporal proximity to the first pressure measurement and/or before the first pressure measurement, wherein the determination of the first pressure value is preferably carried out immediately after the determination of the third pressure value.

10. Method according to one of the preceding claims, wherein the second pressure measurement and/or the determination of the second pressure value are carried out at a moment in time which is fixedly predetermined with respect to the moment in time at which the injector opens, wherein the moment in time is fixedly predetermined, in particular independently of a desired injection quantity, or wherein the second pressure measurement and/or the determination of the second pressure value are carried out at a moment in time which is variable with respect to the moment in time at which the injector opens, wherein the moment in time is determined in particular depending on a desired injection quantity for the respective opening operation of the injector.

11. Method according to one of the preceding claims, wherein the internal combustion engine comprises a common fuel accumulator for a plurality of injectors which are assigned to different combustion chambers, and/or wherein the internal combustion engine comprises a plurality of injectors, wherein the injector opening duration is determined for each injector individually.

12. Method according to one of the preceding claims, wherein the internal combustion engine comprises a pump for generating a variable target pressure in the fuel accumulator, wherein the target pressure and a desired injection quantity are specified on the basis of engine operating parameters and/or a user input, wherein the injector opening duration is determined depending on the desired injection quantity.

13. Engine control software comprising commands for carrying out a method according to one of the preceding claims on an engine control unit having means suitable for executing the method.

14. Internal combustion engine, comprising a controllable injector for injecting fuel into a combustion chamber, and comprising a fuel accumulator with which the injector communicates and through which it is supplied with fuel, and comprising a pressure sensor for measuring the pressure in the fuel accumulator, wherein the internal combustion engine comprises an engine control unit, which is programmed to carry out the following steps:
- determining a first pressure value of the pressure in the fuel accumulator on the basis of a first pressure measurement,
- determining a second pressure value of the pressure in the fuel accumulator on the basis of a second pressure measurement carried out after the first pressure measurement, and
- determining an injector opening duration depending on the first and the second pressure value, and
- controlling the injector based upon the previously determined injector opening direction,
**characterized in that**
the determination of the first and of the second pressure value is effected by different evaluation methods, wherein a second evaluation method used to determine the second pressure value operates faster than a first evaluation method used to determine the first pressure value.

15. Internal combustion engine according to claim 14, wherein the engine control unit is programmed to carry out a method according to one of the claims 1 to 12.

## Revendications

1. Procédé de fonctionnement d'un moteur à combustion interne, qui comporte un injecteur apte à être commandé, destiné à injecter du carburant dans une chambre de combustion, l'injecteur étant en liaison avec un réservoir de carburant par lequel il est alimenté en carburant, ledit procédé comprenant les étapes de :
- détermination d'une première valeur de pression relative à la pression dans le réservoir de carburant sur la base d'une première mesure de pression,
- détermination d'une deuxième valeur de pression relative à la pression dans le réservoir de carburant sur la base d'une deuxième mesure de pression effectuée après la première mesure de pression,
- détermination d'une durée d'ouverture d'injecteur en fonction de la première et de la deuxième valeur de pression et
- commande de l'injecteur sur la base de la durée d'ouverture d'injecteur préalablement déterminée,
**caractérisé en ce que**
la détermination de la première et de la deuxième valeur de pression est effectuée par différents procédés d'évaluation, un second procédé d'évaluation utilisé pour déterminer la deuxième valeur de pression fonctionnant plus rapidement qu'un premier procédé d'évaluation utilisé pour déterminer la première valeur de pression.

2. Procédé selon la revendication 1, dans lequel la première mesure de pression est effectuée avant l'ouverture de l'injecteur et/ou la deuxième mesure de pression est effectuée après l'ouverture de l'injecteur.

3. Procédé selon la revendication 1 ou 2, dans lequel la durée d'ouverture d'injecteur préalablement déterminée est prise en compte pour définir le moment de fermeture pour l'injecteur.

4. Procédé selon la revendication 3, dans lequel, pour déterminer la première valeur de pression, au moins une des étapes de procédé suivantes est exécutée, tandis que la détermination de la deuxième valeur de pression est effectuée sans cette étape :
- correction de la valeur de mesure de pression compte tenu d'une variation de la tension d'alimentation et/ou de la température ;
- sous-échantillonnage ;
- filtrage numérique.

5. Procédé selon l'une des revendications précédentes, dans lequel une première durée d'ouverture d'injecteur est d'abord déterminée en fonction de la première valeur de pression et, après l'obtention de la deuxième valeur de pression, une correction de la première durée d'ouverture d'injecteur est effectuée en fonction de la deuxième valeur de pression.

6. Procédé selon la revendication 5, dans lequel la correction de la première durée d'ouverture d'injecteur dépend de la quantité d'injection souhaitée et/ou de la pression dans le réservoir et/ou est effectuée au moyen d'un diagramme caractéristique, qui dépend de la quantité d'injection souhaitée et/ou de la pression dans le réservoir.

7. Procédé selon la revendication 6, dans lequel, pour la correction de la première durée d'ouverture d'injecteur, une valeur de correction est sélectionnée dans un diagramme caractéristique, la valeur de correction étant sélectionnée sur la base de la première valeur de pression, avant que la deuxième valeur de pression soit déterminée, et la valeur de correction étant adaptée, en particulier mise à l'échelle, après la sélection sur la base de la deuxième valeur de pression.

8. Procédé selon l'une des revendications précédentes, dans lequel la détermination de la durée d'ouverture d'injecteur et en particulier la correction de la première durée d'ouverture d'injecteur est effectuée en fonction d'une différence de pression entre la deuxième valeur de pression et une troisième valeur de pression, la détermination de la deuxième et de la troisième valeur de pression étant de préférence effectuée par l'application du même procédé d'évaluation.

9. Procédé selon la revendication 8, dans lequel la troisième valeur de pression est déterminée sur la base de la première mesure de pression et/ou sur la base d'une troisième mesure de pression, la troisième mesure de pression étant de préférence effectuée à un moment immédiatement proche de la première mesure de pression et/ou avant la première mesure de pression, la détermination de la première valeur de pression étant de préférence effectuée immédiatement après la détermination de la troisième valeur de pression.

10. Procédé selon l'une des revendications précédentes, dans lequel la deuxième mesure de pression et/ou la détermination de la deuxième valeur de pression est effectuée à un moment prédéfini de manière fixe par rapport au moment d'ouverture de l'injecteur, le moment étant en particulier prédéfini de manière fixe indépendamment d'une quantité d'injection souhaitée, ou dans lequel la deuxième mesure de pression et/ou la détermination de la deuxième valeur de pression est effectuée à un moment variable par rapport au moment d'ouverture de l'injecteur, le moment étant en particulier déterminé en fonction d'une quantité d'injection souhaitée pour le processus d'ouverture respectif de l'injecteur.

11. Procédé selon l'une des revendications précédentes, dans lequel le moteur à combustion interne comporte un réservoir de carburant commun pour une pluralité d'injecteurs, qui sont associés à différentes chambres de combustion, et/ou dans lequel le moteur à combustion interne comporte une pluralité d'injecteurs, la détermination de la durée d'ouverture d'injecteur étant effectuée individuellement pour chaque injecteur.

12. Procédé selon l'une des revendications précédentes, dans lequel le moteur à combustion interne comporte une pompe destinée à générer une pression de consigne variable dans le réservoir de carburant, une définition de la pression de consigne et d'une quantité d'injection souhaitée étant effectuée en s'appuyant sur des paramètres de fonctionnement de moteur et/ou une spécification d'utilisateur, la durée d'ouverture d'injecteur étant déterminée en fonction de la quantité d'injection souhaitée.

13. Logiciel de commande de moteur comprenant des instructions pour exécuter un procédé selon l'une des revendications précédentes sur un dispositif de commande de moteur doté de moyens adaptés pour exécuter le procédé.

14. Moteur à combustion interne comprenant un injecteur apte à être commandé, destiné à injecter du carburant dans une chambre de combustion et comprenant un réservoir de carburant, avec lequel l'injecteur est en liaison et par lequel il est alimenté en carburant, et comprenant un capteur de pression destiné à mesurer la pression dans le réservoir de carburant, le moteur à combustion interne comportant un dispositif de commande de moteur, qui est programmé pour exécuter les étapes suivantes :
- détermination d'une première valeur de pression relative à la pression dans le réservoir de carburant sur la base d'une première mesure de pression,
- détermination d'une deuxième valeur de pression relative à la pression dans le réservoir de carburant sur la base d'une deuxième mesure de pression effectuée après la première mesure de pression,
- détermination d'une durée d'ouverture d'injecteur en fonction de la première et de la deuxième valeur de pression et
- commande de l'injecteur sur la base de la durée d'ouverture d'injecteur préalablement déterminée,
**caractérisé en ce que**
la détermination de la première et de la deuxième valeur de pression est effectuée par différents procédés d'évaluation, un second procédé d'évaluation utilisé pour déterminer la deuxième valeur de pression fonctionnant plus rapidement qu'un premier procédé d'évaluation utilisé pour déterminer la première valeur de pression.

15. Moteur à combustion interne selon la revendication 14, dans lequel le dispositif de commande de moteur est programmé pour exécuter un procédé selon l'une des revendications 1 à 12.
